# EUROPEAN PATENT APPLICATION

(11) **EP 4 044 763 A1**
(43) Date of publication of application: **17.08.2022**
(21) Application number: 20884633.7
(22) Date of filing: 04.11.2020
(51) Int. Cl.: H04W 88/06

(54) **COMMUNICATION METHOD AND RELATED DEVICE**

(30) Priority: 08.11.2019 CN 201911097547
(71) Applicant: Huawei Technologies Co., Ltd., Shenzhen, Guangdong 518129 (CN)
(72) Inventor: CAI, Yu, Shenzhen, Guangdong 518129 (CN); JIN, Hui, Shenzhen, Guangdong 518129 (CN); YAO, Chuting, Shenzhen, Guangdong 518129 (CN); WANG, Jian, Shenzhen, Guangdong 518129 (CN)
(74) Representative: Thun, Clemens
(86) International application number: PCT/CN2020/126606
(87) International publication number: WO 2021/088900

(57) **Abstract**

Embodiments of this application provide a communications method and a related device. The method is performed by a terminal, and the method includes: sending first information to a network device in a first network, where the first information indicates to perform a first target operation on a radio resource control RRC connection of the terminal in the first network, and the first target operation includes suspending, releasing, or pausing; and performing a second target operation on the RRC connection of the terminal in the first network, where the second target operation includes suspending, releasing, or pausing. Embodiments of this application can reduce a waste of network resources.

## Description

This application claims priority to Chinese Patent Application No. 201911097547.7, filed with the China National Intellectual Property Administration on November 8, 2019 and entitled "COMMUNICATIONS METHOD AND RELATED DEVICE", which is incorporated herein by reference in its entirety.

### TECHNICAL FIELD

This application relates to the field of communications technologies, and in particular, to a communications method and a related device.

### BACKGROUND

Currently, a plurality of telephone cards can be installed on each of many terminals. For example, a subscriber identification module (Subscriber Identification Module, SIM) card and a universal subscriber identity module (Universal Subscriber Identity Module, USIM) card are installed. The plurality of telephone cards of the terminal each may be registered with a network, and can support the terminal in accessing the network (for example, an operator network). Usually, the terminal on which the plurality of telephone cards are installed can support communication of only one telephone card at a time. Therefore, the following scenario exists: The terminal is currently in connected state in a network corresponding to a card 1, and the terminal is currently in idle state or inactive state in a network corresponding to a card 2. When the terminal needs to perform communication through the card 2, the terminal switches a status of the terminal in the network corresponding to the card 2 to a connected state.

When the terminal is in connected state in the network corresponding to the card 2, if a network device in the network corresponding to the card 1 considers that the terminal is in connected state in the network corresponding to the card 1, when downlink data of the card 1 exists, the network device sends the downlink data to the terminal, but the terminal may not respond to the network device. This causes a waste of network resources.

When the terminal is in connected state in the network corresponding to the card 2, if the network device in the network corresponding to the card 1 considers that the terminal is in idle state or inactive state in the network corresponding to the card 1, when downlink data of the card 1 exists, the network device sends paging to the terminal, but the terminal may not respond to the network device. This causes a waste of network resources.

How to avoid a waste of network resources is a technical problem being studied by persons skilled in the art.

### SUMMARY

Embodiments of this application disclose a communications method and a related device, to reduce a waste of network resources.

According to a first aspect, embodiments of this application provide a communications method. The method is performed by a terminal. The method includes:
sending first information to a network device in a first network, where the first information indicates to perform a first target operation on a radio resource control RRC connection of the terminal in the first network, and the first target operation includes suspending, releasing, or pausing; and
performing a second target operation on the RRC connection of the terminal in the first network, where the second target operation includes suspending, releasing, or pausing.

According to the foregoing method, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

With reference to the first aspect, in a first possible implementation of the first aspect, if the terminal establishes the RRC connection in the first network and needs to communicate with a second network, the terminal performs the operation of sending first information to the network device in the first network.

It may be understood that, when the terminal has a capability of connecting to the first network and a capability of connecting to the second network, a case in which the terminal has established the RRC connection in the first network and needs to communicate with the second network often occurs. In this case, the terminal sends the first information to the network device in the first network, to indicate or request the network device to suspend, pause, or release the RRC connection of the terminal in the first network. In this way, the network device can accurately learn of a current communication state of the terminal. This can significantly reduce cases of incorrectly determining the communication state as a connected state, an idle state, or an inactive state, and significantly reduce a waste of network resources.

With reference to any one of the first aspect or the possible implementation of the first aspect, in a second possible implementation of the first aspect, after the performing a second target operation on the RRC connection of the terminal in the first network, the method further includes:
if seventh information is not sent to the network device in a first time period, skipping sending data or signaling to the network device in the first time period; or
if the seventh information is not sent to the network device in the first time period, skipping receiving, in the first time period, data or signaling sent by the network device; or
if the seventh information is not sent to the network device in the first time period, determining that the network device does not send data or signaling to the terminal in the first time period; or
if the seventh information is not sent to the network device in the first time period, determining that the network device does not receive, in the first time period, data or signaling sent by the terminal, where
the seventh information indicates that the terminal can receive data or signaling sent by the network device, or indicates that the terminal can send data or signaling to the network device, or indicates that the terminal is not busy.

It may be understood that, if the seventh message is not sent to the network device, it indicates that the terminal cannot receive data or signaling sent by the network device, or the terminal cannot send data or signaling to the network device, or the terminal is busy. Therefore, the terminal does not communicate with the network device, to avoid a waste of network resources.

With reference to any one of the first aspect or the possible implementations of the first aspect, in a third possible implementation of the first aspect, after the performing a second target operation on the RRC connection of the terminal in the first network, the method further includes:
if the seventh information is sent to the network device, sending data or signaling to the network device; or
if the seventh information is sent to the network device, receiving data or signaling sent by the network device; or
if the seventh information is sent to the network device, determining that the network device can send data or signaling to the terminal; or
if the seventh information is sent to the network device, determining that the network device receives data or signaling sent by the terminal, where
the seventh information indicates that the terminal can receive data or signaling sent by the network device, or indicates that the terminal can send data or signaling to the network device, or indicates that the terminal is not busy.

It may be understood that, if the seventh message is sent to the network device, it indicates that the terminal can receive data or signaling sent by the network device, or the terminal can send data or signaling to the network device, or the terminal is not busy. Therefore, the terminal starts to communicate with the network device, to effectively ensure that a service of the terminal is performed in the first network.

With reference to any one of the first aspect or the possible implementations of the first aspect, in a fourth possible implementation of the first aspect, after the performing a second target operation on the RRC connection of the terminal in the first network, the method further includes:
skipping sending data or signaling to the network device in a first time period; or
skipping receiving, in the first time period, data or signaling sent by the network device; or
determining that the network device does not send data or signaling to the terminal in the first time period; or
determining that the network device does not receive, in the first time period, data or signaling sent by the terminal.

It may be understood that the terminal does not communicate with the network device after performing the second target operation, to avoid a waste of network resources.

With reference to any one of the first aspect or the possible implementations of the first aspect, in a fifth possible implementation of the first aspect, if the target operation is pausing, after the performing a second target operation on the RRC connection of the terminal in the first network, the method further includes:
performing a third target operation on the RRC connection of the terminal in the first network after the first time period, where the third target operation includes suspending or releasing.

It may be understood that, if the RRC connection of the terminal in the first network is paused, and the terminal is still busy after the first time period, the RRC connection of the terminal in the first network is directly released or suspended, to further reduce a waste of network resources.

With reference to any one of the first aspect or the possible implementations of the first aspect, in a sixth possible implementation of the first aspect, after the performing a third target operation on the RRC connection of the terminal in the first network after the first time period, the method further includes:
skipping sending data or signaling to the network device in a second time period; or
skipping receiving, in the second time period, data or signaling sent by the network device; or
determining that the network device does not send data or signaling to the terminal in the second time period; or
determining that the network device does not receive, in the second time period, data or signaling sent by the terminal.

It may be understood that the terminal does not communicate with the network device after performing the third target operation, to avoid a waste of network resources.

According to a second aspect, embodiments of this application provide a communications method. The method is performed by a network device. The method includes:
receiving first information sent by a terminal, where the first information indicates to perform a first target operation on a radio resource control RRC connection of the terminal in a first network, the first target operation includes suspending, releasing, or pausing, and the network device is a network access device in the first network; and
determining, based on the first information, a second target operation to be performed on the RRC connection of the terminal in the first network, where the target operation includes suspending, releasing, or pausing.

According to the foregoing method, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

With reference to the second aspect, in a first possible implementation of the second aspect, after the determining, based on the first information, a second target operation to be performed by the terminal on the RRC connection of the terminal in the first network, the method further includes:
if seventh information sent by the terminal is not received in a first time period, skipping sending data or signaling to the terminal in the first time period; or
if the seventh information sent by the terminal is not received in the first time period, skipping receiving, in the first time period, data or signaling sent by the terminal; or
if the seventh information sent by the terminal is not received in the first time period, determining that the terminal does not send data or signaling to the network device in the first time period; or
if the seventh information sent by the terminal is not received in the first time period, determining that the terminal does not receive, in the first time period, data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message sent by the terminal is not received, it indicates that the terminal cannot receive data or signaling sent by the network device, or the terminal cannot send data or signaling to the network device, or the terminal is busy. Therefore, the terminal does not communicate with the network device, to avoid a waste of network resources.

With reference to any one of the second aspect or the possible implementation of the second aspect, in a second possible implementation of the second aspect, after the determining, based on the first information, a second target operation to be performed by the terminal on the RRC connection of the terminal in the first network, the method further includes:
if seventh information sent by the terminal is received, sending data or signaling to the terminal; or
if the seventh information sent by the terminal is received, receiving data or signaling sent by the terminal; or
if the seventh information sent by the terminal is received, determining that the terminal can send data or signaling to the network device; or
if the seventh information sent by the terminal is received, determining that the terminal receives data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message sent by the terminal is received, it indicates that the terminal can receive data or signaling sent by the network device, or the terminal can send data or signaling to the network device, or the terminal is not busy. Therefore, the terminal starts to communicate with the network device, to effectively ensure that a service of the terminal is performed in the first network.

With reference to any one of the second aspect or the possible implementations of the second aspect, in a third possible implementation of the second aspect, after the determining, based on the first information, a second target operation to be performed by the terminal on the RRC connection of the terminal in the first network, the method further includes:
skipping sending data or signaling to the terminal in a first time period; or
skipping receiving, in the first time period, data or signaling sent by the terminal; or
determining that the terminal does not send data or signaling to the network device in the first time period; or
determining that the terminal does not receive, in the first time period, data or signaling sent by the network device.

It may be understood that the terminal does not communicate with the network device after performing the second target operation, to avoid a waste of network resources.

With reference to any one of the second aspect or the possible implementations of the second aspect, in a fourth possible implementation of the second aspect, if the target operation is pausing, the method further includes:
performing a third target operation on the RRC connection of the terminal in the first network after the first time period, where the third target operation includes suspending or releasing.

It may be understood that, if the RRC connection of the terminal in the first network is paused, and the terminal is still busy after the first time period, the RRC connection of the terminal in the first network is directly released or suspended, to further reduce a waste of network resources.

With reference to any one of the second aspect or the possible implementations of the second aspect, in a fifth possible implementation of the second aspect, after the performing a third target operation on the RRC connection of the terminal in the first network after the first time period, the method further includes:
skipping sending data or signaling to the terminal in a second time period; or
skipping receiving, in the second time period, data or signaling sent by the terminal; or
determining that the terminal does not send data or signaling to the network device in the second time period; or
determining that the terminal does not receive, in the second time period, data or signaling sent by the network device.

It may be understood that the terminal does not communicate with the network device after performing the third target operation, to avoid a waste of network resources.

According to a third aspect, embodiments of this application provide a terminal, including a function unit configured to perform the method in any one of the first aspect or the possible implementations of the first aspect.

According to a fourth aspect, embodiments of this application provide a network device, including a function unit configured to perform the method in any one of the second aspect or the possible implementations of the second aspect.

According to a fifth aspect, embodiments of this application provide a terminal, including a processor, a memory, and a transceiver. The memory is configured to store a computer program, and the processor invokes the computer program to perform the method in any one of the first aspect or the possible implementations of the first aspect.

According to a sixth aspect, embodiments of this application provide a network device, including a processor, a memory, and a transceiver. The memory is configured to store a computer program, and the processor invokes the computer program to perform the method in any one of the second aspect or the possible implementations of the second aspect.

According to a seventh aspect, embodiments of this application provide a computer storage medium. The computer storage medium stores a computer program. When the computer program is run on a processor, the method in any one of the first aspect or the possible implementations of the first aspect is implemented, or the method in any one of the second aspect or the possible implementations of the second aspect is implemented.

According to an eighth aspect, embodiments of this application provide a chip system. The chip system includes at least one processor, a memory, and an interface circuit. The memory, the interface circuit, and the at least one processor are interconnected through a line. The at least one memory stores a computer program. When the computer program is executed by the processor, the method in any one of the first aspect or the possible implementations of the first aspect is implemented, or the method in any one of the second aspect or the possible implementations of the second aspect is implemented.

According to embodiments of this application, if the terminal establishes the RRC connection in the first network and needs to communicate with the second network, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

### BRIEF DESCRIPTION OF DRAWINGS

The following describes accompanying drawings used in embodiments of this application.
FIG. 1 is a schematic diagram of an architecture of a communications system according to an embodiment of this application;
FIG. 2 is a schematic flowchart of a communications method according to an embodiment of this application;
FIG. 3 is a schematic flowchart of a communications method according to an embodiment of this application;
FIG. 4 is a schematic diagram of a structure of a terminal according to an embodiment of this application;
FIG. 5 is a schematic diagram of a structure of a network device according to an embodiment of this application;
FIG. 6 is a schematic diagram of a structure of a network device according to an embodiment of this application;
FIG. 7 is a schematic diagram of a structure of a terminal according to an embodiment of this application; and
FIG. 8 is a schematic diagram of a structure of a network device according to an embodiment of this application.

### DESCRIPTION OF EMBODIMENTS

The following describes embodiments of this application with reference to the accompanying drawings in embodiments of this application.

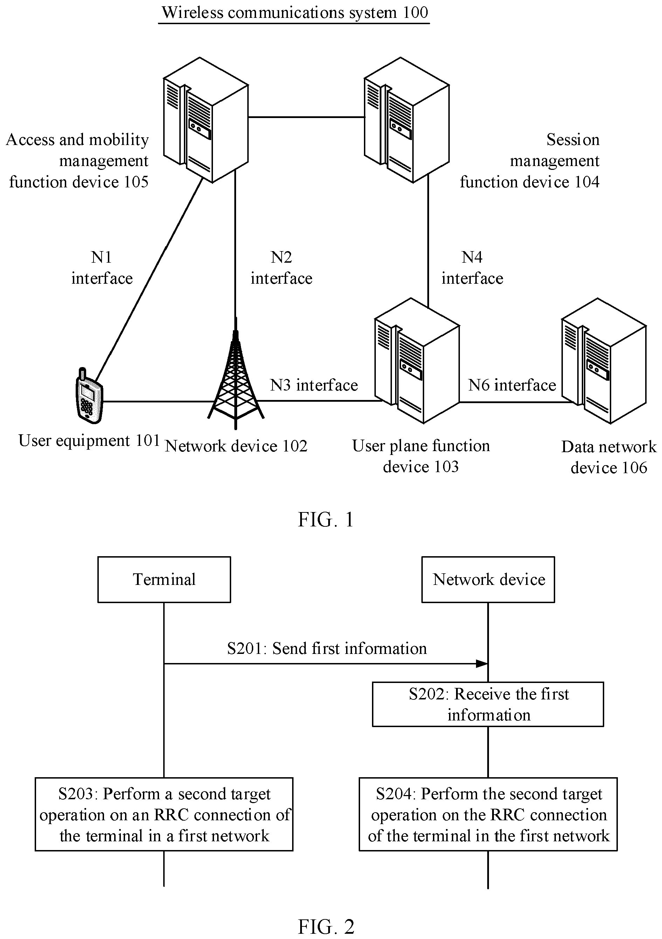

FIG. 1 is a schematic diagram of an architecture of a wireless communications system according to an embodiment of this application. A wireless communications system 100 includes a terminal 101, a network device 102, a user plane function (user plane function, UPF) device 103, a session management function (session management function, SMF) device 104, an access and mobility management function (access and mobility management function, AMF) device 105, and a data network (data network, DN) device 106.

The terminal 101 may alternatively be referred to as a terminal device, a mobile console, an access terminal, a subscriber unit, a subscriber station, a mobile station, a remote station, a remote terminal, a mobile device, a wireless communications device, a user agent, a user apparatus, a smart home device, a workshop device, or the like. For example, the terminal may be a handheld terminal, a notebook computer, a subscriber unit (subscriber unit), a cellular phone (cellular phone), a smart phone (smart phone), a wireless data card, a personal digital assistant (personal digital assistant, PDA), a handheld device having a wireless communications function, a vehicle-mounted device, a wearable device, a mobile station in a future 5G network, or a terminal in a future evolved public land mobile network (public land mobile network, PLMN). The terminal 101 and the network device 102 communicate with each other by using an air interface technology.

A plurality of chip cards are installed on the terminal 101, and each chip card is used by the terminal to access a network. For example, some of the plurality of chip cards are SIM cards, and some are USIM cards; or all are SIM cards; or all are USIM cards; or there is another case. For ease of description, an example of two chip cards in the terminal is used in the following description. One is referred to as a first chip card, and the other is referred to as a second chip card. The first chip card is used by the terminal to access a first network, and the second chip card is used by the terminal to access a second network. In embodiments of this application, when an RRC connection of the terminal in the first network through the first chip card is in connected state, if the terminal determines to perform communication such as tracking area update (tracking area update, TAU) through the second chip card (that is, determine that terminal needs to communicate with the second network), the RRC connection of the terminal in the first network may be suspended, released, or paused.

The network device 102 is mainly responsible for functions on an air interface side, such as radio resource management, quality of service (quality of service, QoS) management, and data compression and encryption. The network device 102 may include network side devices in various forms, for example, an access network (access network, AN) device, a macro base station, a micro base station (also referred to as a small cell), a relay station, and an access point. In systems using different radio access technologies, the network device may have different names. For example, the network device is referred to as a next generation NodeB (next-generation NodeB, gNB) in a 5G communications system, an evolved NodeB (evolved NodeB, eNB or eNodeB) in a long term evolution (long term evolution, LTE) system, or a NodeB (NodeB) in a 3rd generation (3rd Generation, 3G) system.

The user plane function device 103 is configured to receive a data packet from the terminal 101, forward a data packet, control quality of service (quality of service, QoS), collect statistics about charging information, and the like.

The session management function device 104 is configured to manage setup, deletion, and the like of a packet data unit (packet data unit, PDU) session of a user, and maintain a PDU session context and user plane forwarding management channel information.

The access and mobility management function device 105 is configured to perform access and mobility management, interact with network elements such as the network device 102 and the session management function device 104, and forward signaling.

The data network device 106 is configured to provide various services (for example, network access and an operator service) for a user. For example, the data network device 106 may be a server.

Types of data networks include but are not limited to the internet (Internet), an internet protocol multimedia subsystem (Internet protocol multimedia subsystem, IMS), and the like.

A PDU session described in embodiments of this application is a PDU connection established between a terminal and a data network. Types of PDU sessions include but are not limited to an IP type and a non-IP type, and the non-IP type includes but is not limited to an Ethernet type.

In the wireless communications system 100, the terminal 101 communicates with the network device 102 through a radio interface, and the terminal 101 may also communicate with the access and mobility management function device 105 through a radio interface. FIG. 1 shows communications interfaces between the function network elements. The terminal 101 is connected to the access and mobility management function device 105 through an interface, and the interface may be a next generation (next generation, NG) 1 interface. The network device 102 is connected to the access and mobility management function device 105 through an interface, and the interface may be an N2 interface. The network device 102 is connected to the user plane function device 103 through an interface, and the interface may be an N3 interface. The user plane function device 103 is connected to the session management function device 104 through an interface, and the interface may be an N4 interface.

FIG. 2 shows a communications method according to an embodiment of this application. The method may be implemented based on the wireless communications system shown in FIG. 1. The method includes but is not limited to the following steps.

Step S201: A terminal sends first information to a network device in a first network.

Specifically, if the terminal establishes a connection in the first network and needs to communicate with a second network, or if the terminal establishes a connection in the first network and needs to establish a connection in the second network, or if the terminal communicates with the first network and needs to communicate with the second network, or if the terminal is in connected state in the first network and needs to enter a connected state in the second network, the terminal sends the first information to the network device in the first network. That is, before the terminal sends the first information to the network device in the first network, the terminal establishes a connection to the first network in the first network and the terminal determines that the terminal needs to communicate with the second network, or the terminal establishes a connection in the first network and needs to establish a connection in the second network, or the terminal communicates with the first network and needs to communicate with the second network, or the terminal is in connected state in the first network and needs to enter a connected state in the second network. The connection may be an RRC connection, a signaling connection, a NAS signaling connection, an AN signaling connection, a data connection, a user plane connection, or a control plane connection. Communicating with a network includes at least one of sending to the network and receiving from the network.

Specifically, the first information indicates at least one of the following:
(1) to perform a first target operation on the connection of the terminal in the first network, where the first target operation includes suspending, releasing, or pausing;
(2) that the terminal is to leave the first network;
(3) that the terminal is to establish a connection to another network;
(4) that the terminal is to establish a connection through another chip card;
(5) that the terminal is to enter a connected state in another network;
(6) that the terminal is busy; and
(7) the network not to send data or signaling to the terminal, or in other words, the network to stop sending data or signaling to the terminal.

The terminal in this embodiment of this application may be in the following states:
Connection management (Connection Management, CM) connected state CM_CONNECTED:
The terminal in CM_CONNECTED state has a NAS signaling connection. If the terminal is in CM_CONNECTED and RRC non-idle state, and there is downlink data or downlink signaling for the terminal, a base station initiates paging for the terminal. The terminal needs to monitor the paging.

Connection management (Connection Management, CM) idle state CM_IDLE:
The terminal in CM_IDLE state does not have a NAS signaling connection. If there is downlink data or downlink signaling for the terminal, a core network initiates paging for the terminal. The terminal needs to monitor the paging.

RRC idle state RRC_IDLE:
When the terminal is in RRC_IDLE state, if there is downlink data or downlink signaling for the terminal, a core network initiates paging for the terminal. An MME or AMF sends a paging message to a network device (for example, a base station), and the network device sends the paging message to the terminal.

The terminal in RRC_IDLE state needs to monitor the paging. If the terminal receives the paging, the terminal responds to the paging, and the terminal performs random access and enters an RRC_CONNECTED state from an IDLE state.

RRC inactive state RRC_INACTIVE:
When the terminal is in RRC_INACTIVE state, if there is downlink data or downlink signaling for the terminal, a network device (for example, a base station) pages the terminal. The terminal and the network device (for example, the base station) store an access stratum (access stratum, AS) context of the terminal.

The terminal in RRC_IDLE state needs to monitor the paging. If the terminal receives the paging, the terminal responds to the paging, and the terminal resumes an RRC connection and enters an RRC_CONNECTED state from an RRC_INACTIVE state.

RRC connected state RRC_CONNECTED:
When the terminal is in RRC_CONNECTED state, a network device (for example, a base station) may transmit data or signaling to the terminal. The terminal and the network device store an access stratum (access stratum, AS) context of the terminal.

To receive data or signaling sent by the network device (for example, the base station), the terminal further needs to send signaling such as an ACK/NACK to the network device.

The first target operation in this embodiment of this application may include suspending, releasing, or pausing. An example is described below.

If the first target operation is suspending suspend, including suspending an established radio bearer and suspending an RRC connection, the terminal enters an RRC inactive state RRC_INACTIVE from an RRC connected state RRC_CONNECTED.

If the first target operation is releasing release, including releasing an established radio bearer and all radio resources and releasing an RRC connection, the terminal enters an RRC idle state RRC_IDLE from an RRC connected state RRC_CONNECTED.

If the first target operation is pausing, including pausing communication, the terminal pauses data and signaling transmission. Optionally, after the pause, the terminal is in RRC_CONNECTED state.

Step S202: The network device receives the first information sent by the terminal.

Specifically, the network device parses (or decodes or demodulates) the first information, to learn of the content indicated by the first information. For example, the first information may indicate the following content:
(1) to perform the first target operation on the connection of the terminal in the first network, where the first target operation includes suspending, releasing, or pausing;
(2) that the terminal is to leave the first network;
(3) that the terminal is to establish a connection to another network;
(4) that the terminal is to establish a connection through another chip card;
(5) that the terminal is to enter a connected state in another network;
(6) that the terminal is busy; and
(7) the network not to send data or signaling to the terminal, or in other words, the network to stop sending data or signaling to the terminal.

Subsequently, a response made by the network device has the following cases:
Case 1: The first information may be a notification message. After learning of the content of the first information, the network device does not need to feed back information to the terminal. After sending the first information, the terminal automatically performs step S203 subsequently.
Case 2: The first information may be a notification message. After learning of the content of the first information, the network device needs to feed back signaling such as an ACK/NACK to the terminal. If the terminal receives the ACK signaling returned by the network device, the terminal subsequently performs step S203. If the terminal receives the NACK signaling returned by the network device, the terminal does not perform step S203 subsequently.
Case 3: The first information may be a request message. The network device makes a decision after learning of the content of the first information. Optionally, the network device may send second information to the terminal, and the second information indicates the second target operation. Therefore, subsequently, after receiving the second information, the terminal performs step S203 based on an indication of the second information.

Step S203: The terminal performs the second target operation on the connection of the terminal in the first network.

Specifically, the second target operation includes suspending, releasing, or pausing. It should be noted that, in some cases, the second target operation is the first target operation, and in some cases, the second target operation may be different from the first target operation. For example, in Case 1 in step S202, the second target operation is equivalent to the first target operation. For another example, in Case 2 in step S202, the second target operation is equivalent to the first target operation. For another example, in Case 3 in step S202, the terminal requests to perform the first target operation, but the network device indicates the terminal to perform the second target operation. If the network device allows, after making a comprehensive decision based on some factors, the terminal to perform the first target operation, the second target operation is the same as the first target operation. If the network device does not allow, after making a comprehensive decision based on some factors, the terminal to perform the first target operation, the second target operation is different from the first target operation. For example, the first target operation is suspending, and the second target operation is releasing.

In this embodiment of this application, the terminal needs to use corresponding configuration information to perform the second target operation. The configuration information may be sent by the network device to the terminal. For example, the configuration information may be carried in existing information (for example, the second information in Case 3 in step S202) and sent to the terminal, or the configuration information may be separately sent to the terminal. In addition, a sending occasion of the configuration information is not limited, either, provided that the configuration information is sent before the terminal performs the second target operation. In addition, the configuration parameter may include one or more of the following:
redirection carrier information (redirectedCarrierInfo), indicating a carrier frequency for redirection;
a cell reselection priority (cellReselectionPriorities), indicating a frequency priority during cell reselection;
a suspend configuration (suspendConfig), indicating a configuration of an RRC_INACTIVE state, used in a case in which a connection is suspended, and including the following parameters: a full I-RNTI (full inactive radio network temporary identity Inactive RNTI Radio Network Temporary Identity), a short I-RNTI (short inactive radio network temporary identity I-RNTI), a RAN paging cycle ran-PagingCycle (indicating a RAN paging cycle of UE), RAN notification area information ran-NotificationArealnfo (indicating a cell in a RAN area), and the like;
a sounding reference signal (Sounding reference signal, SRS) configuration;
a scheduling request (Scheduling Request, SR) configuration; and
a random access channel (Random Access Channel, RACH) configuration.

In this embodiment of this application, after performing the second target operation on the connection of the terminal in the first network, the terminal adjusts a policy for communication with the network device. An adjustment manner includes but is not limited to the following manners:
Manner 1: Communication between the terminal and the network device is interrupted, but the interruption may be woken up. The following lists several specific implementations.

Implementation a1: If the terminal does not send seventh information to the network device, skip sending data or signaling to the network device (or skip responding to data or signaling sent by the network device). If the terminal sends the seventh information to the network device, send data or signaling to the network device (or respond to data or signaling sent by the network device). In this embodiment of this application, "if the terminal does not send seventh information to the network device" may be alternatively described as "before the terminal sends the seventh information to the network device", and "if the terminal sends the seventh information to the network device" may be alternatively described as "after the terminal sends the seventh information to the network device". Similar descriptions are not further explained in the following.

Implementation a2: If the terminal does not send the seventh information to the network device, skip receiving data or signaling sent by the network device. If the terminal sends the seventh information to the network device, receive data or signaling sent by the network device.

Implementation a3: If the terminal does not send the seventh information to the network device, determine that the network device does not send data or signaling to the terminal. If the terminal sends the seventh information to the network device, determine that the network device can send data or signaling to the terminal. "Determine" herein may alternatively be expressed as consider (consider), assume (assume), expect (expect), anticipate, or predict.

Implementation a4: If the terminal does not send the seventh information to the network device, determine that the network device does not receive data or signaling sent by the terminal. If the terminal sends the seventh information to the network device, determine that the network device receives data or signaling sent by the terminal. "Determine" herein may alternatively be expressed as consider (consider), assume (assume), expect (expect), anticipate, or predict.

During specific application, one or a combination of the listed implementations may be used.

The seventh information indicates that the terminal can receive data or signaling sent by the network device, or indicates that the terminal can send data or signaling to the network device, or indicates that the network device can send data or signaling to the network device, or indicates that the network device receives data or signaling sent by the terminal, or indicates that the terminal is not busy, or indicates to resume communication, or indicates to resume a connection.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Manner 2: Communication between the terminal and the network device is interrupted in a first time period. The following lists several specific implementations.

Implementation b1: Skip sending data or signaling to the network device in the first time period.

Implementation b2: Skip receiving, in the first time period, data or signaling sent by the network device.

Implementation b3: Determine that the network device does not send data or signaling to the terminal in the first time period. "Determine" herein may alternatively be expressed as consider (consider), assume (assume), expect (expect), anticipate, or predict.

Implementation b4: Determine that the network device does not receive, in the first time period, data or signaling sent by the terminal. "Determine" herein may alternatively be expressed as consider (consider), assume (assume), expect (expect), anticipate, or predict.

Optionally, communication between the terminal and the network device may alternatively be woken up after the first time period. The following lists several specific implementations.

Implementation b5: Send data or signaling to the network device after the first time period.

Implementation b6: Receive, after the first time period, data or signaling sent by the network device.

Implementation b7: Determine that the network device sends data or signaling to the terminal after the first time period. "Determine" herein may alternatively be expressed as consider (consider), assume (assume), expect (expect), anticipate, or predict.

Implementation b8: Determine that the network device receives, after the first time period, data or signaling sent by the terminal. "Determine" herein may alternatively be expressed as consider (consider), assume (assume), expect (expect), anticipate, or predict. During specific application, one or a combination of the listed implementations may be used.

Manner 3: Communication between the terminal and the network device is interrupted in the first time period, but the interruption may be woken up. The following lists several specific implementations.

Implementation c1: If the terminal does not send the seventh information to the network device in the first time period, skip sending data or signaling to the network device (or skip responding to data or signaling sent by the network device) in the first time period. If the terminal sends the seventh information to the network device in the first time period, send data or signaling to the network device (or respond to data or signaling sent by the network device) in the first time period. In this embodiment of this application, "if the terminal does not send the seventh information to the network device" may be alternatively described as "before the terminal sends the seventh information to the network device", and "if the terminal sends the seventh information to the network device" may be alternatively described as "after the terminal sends the seventh information to the network device". Similar descriptions are not further explained in the following.

Implementation c2: If the terminal does not send the seventh information to the network device in the first time period, skip receiving, in the first time period, data or signaling sent by the network device. If the terminal sends the seventh information to the network device in the first time period, receive, in the first time period, data or signaling sent by the network device.

Implementation c3: If the terminal does not send the seventh information to the network device in the first time period, determine that the network device does not send data or signaling to the terminal in the first time period. If the terminal sends the seventh information to the network device in the first time period, determine that the network device can send data or signaling to the terminal in the first time period. "Determine" herein may alternatively be expressed as consider (consider), assume (assume), expect (expect), anticipate, or predict.

Implementation c4: If the terminal does not send the seventh information to the network device in the first time period, determine that the network device does not receive, in the first time period, data or signaling sent by the terminal. If the terminal sends the seventh information to the network device in the first time period, determine that the network device receives, in the first time period, data or signaling sent by the terminal. "Determine" herein may alternatively be expressed as consider (consider), assume (assume), expect (expect), anticipate, or predict.

The seventh information indicates that the terminal can receive data or signaling sent by the network device, or indicates that the terminal can send data or signaling to the network device, or indicates that the network device can send data or signaling to the network device, or indicates that the network device receives data or signaling sent by the terminal, or indicates that the terminal is not busy, or indicates to resume communication, or indicates to resume a connection.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Step S204: The network device performs the second target operation on the connection of the terminal in the first network.

In this embodiment of this application, after performing the second target operation on the connection of the terminal in the first network, the network device adjusts a policy for communication with the network device. An adjustment manner includes but is not limited to the following manners:
Manner 4: Communication between the terminal and the network device is interrupted, but the interruption may be woken up. The following lists several specific implementations.

Implementation d1: If the seventh information sent by the terminal is not received, skip sending data or signaling to the terminal. If the seventh information sent by the terminal is received, send data or signaling to the terminal. In this embodiment of this application, "if the seventh information sent by the terminal is not received" may alternatively be described as "before the seventh information sent by the terminal is received", and "if the seventh information sent by the terminal is received" may alternatively be described as "after the seventh information sent by the terminal is received". Similar descriptions are not further explained in the following.

Implementation d2: If the seventh information sent by the terminal is not received, skip receiving data or signaling sent by the terminal. If the seventh information sent by the terminal is received, receive data or signaling sent by the terminal.

Implementation d3: If the seventh information sent by the terminal is not received, determine that the terminal does not send data or signaling to the network device. If the seventh information sent by the terminal is received, determine that the terminal can send data or signaling to the network device. "Determine" herein may alternatively be expressed as consider (consider), assume (assume), expect (expect), anticipate, or predict.

Implementation d4: If the seventh information sent by the terminal is not received, determine that the terminal does not receive data or signaling sent by the network device. If the seventh information sent by the terminal is received, determine that the terminal receives data or signaling sent by the network device. "Determine" herein may alternatively be expressed as consider (consider), assume (assume), expect (expect), anticipate, or predict.

The seventh information indicates that the terminal can receive data or signaling sent by the network device, or indicates that the terminal can send data or signaling to the network device, or indicates that the network device can send data or signaling to the network device, or indicates that the network device receives data or signaling sent by the terminal, or indicates that the terminal is not busy, or indicates to resume communication, or indicates to resume a connection.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Manner 5: Communication between the terminal and the network device is interrupted in the first time period. The following lists several specific implementations.

Implementation e1: Skip sending data or signaling to the terminal in the first time period.

Implementation e2: Skip receiving, in the first time period, data or signaling sent by the terminal.

Implementation e3: Determine that the terminal does not send data or signaling to the network device in the first time period. "Determine" herein may alternatively be expressed as consider (consider), assume (assume), expect (expect), anticipate, or predict.

Implementation e4: Determine that the terminal does not receive, in the first time period, data or signaling sent by the network device. "Determine" herein may alternatively be expressed as consider (consider), assume (assume), expect (expect), anticipate, or predict.

Optionally, the communication between the terminal and the network device may be woken up after the first time period. The following lists several specific implementations.

Implementation e5: Send data or signaling to the terminal after the first time period.

Implementation e6: Receive, after the first time period, data or signaling sent by the terminal.

Implementation e7: Determine that the terminal sends data or signaling to the network device after the first time period. "Determine" herein may alternatively be expressed as consider (consider), assume (assume), expect (expect), anticipate, or predict.

Implementation e8: Determine that the terminal receives, after the first time period, data or signaling sent by the network device. "Determine" herein may alternatively be expressed as consider (consider), assume (assume), expect (expect), anticipate, or predict.

During specific application, one or a combination of the listed implementations may be used.

Manner 6: Communication between the terminal and the network device is interrupted in the first time period, but the interruption may be woken up. The following lists several specific implementations.

Implementation f1: If the seventh information sent by the terminal is not received in the first time period, skip sending data or signaling to the terminal (or skip responding to data or signaling sent by the terminal) in the first time period. If the seventh information sent by the terminal is received in the first time period, send data or signaling to the terminal (or respond to data or signaling sent by the terminal) in the first time period. In this embodiment of this application, "if the seventh information sent by the terminal is not received" may alternatively be described as "before the seventh information sent by the terminal is received", and "if the seventh information sent by the terminal is received" may alternatively be described as "after the seventh information sent by the terminal is received". Similar descriptions are not further explained in the following.

Implementation f2: If the seventh information sent by the terminal is not received in the first time period, skip receiving, in the first time period, data or signaling sent by the terminal. If the seventh information sent by the terminal is received in the first time period, receive, in the first time period, data or signaling sent by the terminal.

Implementation f3: If the seventh information sent by the terminal is not received in the first time period, determine that the terminal does not send data or signaling to the network device in the first time period. If the seventh information sent by the terminal is received in the first time period, determine that the terminal can send data or signaling to the network device in the first time period. "Determine" herein may alternatively be expressed as consider (consider), assume (assume), expect (expect), anticipate, or predict.

Implementation f4: If the seventh information sent by the terminal is not received in the first time period, determine that the terminal does not receive, in the first time period, data or signaling sent by the network device. If the seventh information sent by the terminal is received in the first time period, determine that the terminal receives, in the first time period, data or signaling sent by the network device. "Determine" herein may alternatively be expressed as consider (consider), assume (assume), expect (expect), anticipate, or predict.

The seventh information indicates that the terminal can receive data or signaling sent by the network device, or indicates that the terminal can send data or signaling to the network device, or indicates that the network device can send data or signaling to the network device, or indicates that the network device receives data or signaling sent by the terminal, or indicates that the terminal is not busy, or indicates to resume communication, or indicates to resume a connection.

During specific application, one or a combination of the listed implementations may be used.

Manner 2, Manner 3, Manner 5, and Manner 6 all relate to the first time period. The following lists solutions for determining the first time period.

Solution A1: The terminal and the network device determine the first time period based on a time length. The first time period may use a moment at which the network device receives the first information as a start point, or use a moment at which the terminal receives the second information as a start point, or use a preconfigured or predefined moment as a start point. The time length may be predefined in a protocol. The time length may be configured by the network device. Specifically, the network device sends fifth information to the terminal, and the fifth information indicates the time length. Alternatively, the time length may be determined by the terminal. Specifically, the terminal sends sixth information to the network device, and the sixth information indicates the time length.

Solution A2: The terminal may alternatively send indication information to the network device. The indication information indicates the first time period.

Solution A3: The terminal may alternatively send indication information to the network device. The indication information indicates the first time period.

Solution A4: The terminal determines the first time period, for example, uses a moment at which the terminal completes the second target operation as a start point, and then configures a time length (which may be preconfigured in a protocol), to obtain a time period. The time period is the first time period. In addition, the terminal sends the sixth information to the network device. The sixth information indicates the first time period or the time length of the first time period. In this way, the network device can directly determine the first time period based on the first time period indicated by the sixth information, or indirectly determine the first time period based on the time length of the first time period indicated by the sixth information. For example, the network device roughly determines a moment as a start point (the start point is the same as or close to the start point determined by the terminal) based on a previous status of communication with the terminal, and then may obtain the first time period with reference to the time length indicated by the sixth information. In this way, both the terminal and the network device can determine the first time period, and perform a corresponding operation based on the first time period.

Solution B: The network device determines the first time period. For example, the network device uses a moment at which the network device receives the first information or sends the second information as a start point, and then configures a time length (which may be predefined in a protocol), to obtain a time period. The time period is the first time period. In addition, the network device sends fourth information to the terminal to indicate the first time period, or sends fifth information to the terminal to indicate the time length of the first time period. In this way, the terminal can directly determine the first time period based on the first time period indicated by the fourth information, or indirectly determine the first time period based on the length of the first time period indicated by the fifth information. For example, the terminal roughly determines a moment as a start point (the start point is the same as or close to the start point determined by the network device) based on a previous status of communication with the network device, and then may obtain the first time period with reference to the time length indicated by the fifth information. In this way, both the terminal and the network device can determine the first time period, and perform a corresponding operation based on the first time period.

Solution C: The network device and the terminal determine respective first time periods. Because determining principles are the same, the first time periods obtained by the network device and the terminal are the same or similar.

In this embodiment of this application, if the second target operation is pausing, the method may further include the following steps:

Step S205: The terminal performs a third target operation on the connection of the terminal in the first network after the first time period.

The third target operation includes suspending or releasing. Specifically, whether the third target operation is suspending or releasing may be configured by the base station.

Optionally, if the terminal does not send the seventh information to the network device in the first time period, the terminal performs the third target operation on the connection of the terminal in the first network after the first time period.

Optionally, if the terminal determines that the terminal cannot communicate with the network device when the first time period ends, the terminal performs the third target operation on the connection of the terminal in the first network after the first time period.

In this embodiment of this application, after performing the third target operation on the connection of the terminal in the first network, the terminal adjusts a policy for communication with the network device. An adjustment manner includes but is not limited to the following manners:

Manner 7: Communication between the terminal and the network device is interrupted, but the interruption may be woken up. The following lists several specific implementations.

Implementation g1: If the terminal does not send the seventh information to the network device, skip sending data or signaling to the network device (or skip responding to data or signaling sent by the network device). If the terminal sends the seventh information to the network device, send data or signaling to the network device (or respond to data or signaling sent by the network device). In this embodiment of this application, "if the terminal does not send the seventh information to the network device" may be alternatively described as "before the terminal sends the seventh information to the network device", and "if the terminal sends the seventh information to the network device" may be alternatively described as "after the terminal sends the seventh information to the network device". Similar descriptions are not further explained in the following.

Implementation g2: If the terminal does not send the seventh information to the network device, skip receiving data or signaling sent by the network device. If the terminal sends the seventh information to the network device, receive data or signaling sent by the network device.

Implementation g3: If the terminal does not send the seventh information to the network device, determine that the network device does not send data or signaling to the terminal. If the terminal sends the seventh information to the network device, determine that the network device can send data or signaling to the terminal. "Determine" herein may alternatively be expressed as consider (consider), assume (assume), expect (expect), anticipate, or predict.

Implementation g4: If the terminal does not send the seventh information to the network device, determine that the network device does not receive data or signaling sent by the terminal. If the terminal sends the seventh information to the network device, determine that the network device receives data or signaling sent by the terminal. "Determine" herein may alternatively be expressed as consider (consider), assume (assume), expect (expect), anticipate, or predict.

The seventh information indicates that the terminal can receive data or signaling sent by the network device, or indicates that the terminal can send data or signaling to the network device, or indicates that the network device can send data or signaling to the network device, or indicates that the network device receives data or signaling sent by the terminal, or indicates that the terminal is not busy, or indicates to resume communication, or indicates to resume a connection.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Manner 8: Communication between the terminal and the network device is interrupted in a second time period. The following lists several specific implementations.

Implementation h1: Skip sending data or signaling to the network device in the second time period.

Implementation h2: Skip receiving, in the second time period, data or signaling sent by the network device.

Implementation h3: Determine that the network device does not send data or signaling to the terminal in the second time period. "Determine" herein may alternatively be expressed as consider (consider), assume (assume), expect (expect), anticipate, or predict.

Implementation h4: Determine that the network device does not receive, in the second time period, data or signaling sent by the terminal. "Determine" herein may alternatively be expressed as consider (consider), assume (assume), expect (expect), anticipate, or predict.

Optionally, the communication between the terminal and the network device may be woken up after the second time period. The following lists several specific implementations.

Implementation h5: Send data or signaling to the network device after the second time period.

Implementation h6: Receive, after the second time period, data or signaling sent by the network device.

Implementation h7: Determine that the network device sends data or signaling to the terminal after the second time period. "Determine" herein may alternatively be expressed as consider (consider), assume (assume), expect (expect), anticipate, or predict.

Implementation h8: Determine that the network device receives, after the second time period, data or signaling sent by the terminal. "Determine" herein may alternatively be expressed as consider (consider), assume (assume), expect (expect), anticipate, or predict.

During specific application, one or a combination of the listed implementations may be used.

Manner 9: Communication between the terminal and the network device is interrupted in the second time period, but the interruption may be woken up. The following lists several specific implementations.

Implementation i1: If the terminal does not send the seventh information to the network device in the second time period, skip sending data or signaling to the network device (or skip responding to data or signaling sent by the network device) in the second time period. If the terminal sends the seventh information to the network device in the second time period, send data or signaling to the network device (or respond to data or signaling sent by the network device) in the second time period. In this embodiment of this application, "if the terminal does not send the seventh information to the network device" may be alternatively described as "before the terminal sends the seventh information to the network device", and "if the terminal sends the seventh information to the network device" may be alternatively described as "after the terminal sends the seventh information to the network device". Similar descriptions are not further explained in the following.

Implementation i2: If the terminal does not send the seventh information to the network device in the second time period, skip receiving, in the second time period, data or signaling sent by the network device. If the terminal sends the seventh information to the network device in the second time period, receive, in the second time period, data or signaling sent by the network device.

Implementation i3: If the terminal does not send the seventh information to the network device in the second time period, determine that the network device does not send data or signaling to the terminal in the second time period. If the terminal sends the seventh information to the network device in the second time period, determine that the network device can send data or signaling to the terminal in the second time period. "Determine" herein may alternatively be expressed as consider (consider), assume (assume), expect (expect), anticipate, or predict.

Implementation i4: If the terminal does not send the seventh information to the network device in the second time period, determine that the network device does not receive, in the second time period, data or signaling sent by the terminal. If the terminal sends the seventh information to the network device in the second time period, determine that the network device receives, in the second time period, data or signaling sent by the terminal. "Determine" herein may alternatively be expressed as consider (consider), assume (assume), expect (expect), anticipate, or predict.

The seventh information indicates that the terminal can receive data or signaling sent by the network device, or indicates that the terminal can send data or signaling to the network device, or indicates that the network device can send data or signaling to the network device, or indicates that the network device receives data or signaling sent by the terminal, or indicates that the terminal is not busy, or indicates to resume communication, or indicates to resume a connection.

During specific application, one or a combination of the listed implementations may be used.

Step S206: The network device performs the third target operation on the RRC connection of the terminal in the first network after the first time period.

The third target operation includes suspending or releasing.

Optionally, if the network device sends data or signaling to the terminal after the first time period, and does not receive a response from the terminal, the network device performs the third target operation on the RRC connection of the terminal in the first network after the first time period.

Optionally, if the network device does not receive first indication information in the first time period, the network device performs the third target operation on the RRC connection of the terminal in the first network after the first time period. The first indication information indicates that the terminal can receive and/or send data or signaling, or the first indication information indicates that the network device can send data or signaling to the terminal, or the first indication information indicates that the terminal is not busy, or the first indication information indicates that the terminal has ended a connection to another network other than the first network, or the like.

In this embodiment of this application, after performing the third target operation on the RRC connection of the terminal in the first network, the network device adjusts a policy for communication with the network device. An adjustment manner includes but is not limited to the following manners:
Manner 10: Communication between the network device and the terminal is interrupted, but the interruption may be woken up. The following lists several specific implementations.

Implementation j 1: If the seventh information sent by the terminal is not received, skip sending data or signaling to the terminal (or skip responding to data or signaling sent by the terminal). If the seventh information sent by the terminal is received, send data or signaling to the terminal (or respond to data or signaling sent by the terminal). In this embodiment of this application, "if the seventh information sent by the terminal is not received" may alternatively be described as "before the seventh information sent by the terminal is received", and "if the seventh information sent by the terminal is received" may alternatively be described as "after the seventh information sent by the terminal is received". Similar descriptions are not further explained in the following.

Implementation j2: If the seventh information sent by the terminal is not received, skip receiving data or signaling sent by the terminal. If the seventh information sent by the terminal is received, receive data or signaling sent by the terminal.

Implementation j3: If the seventh information sent by the terminal is not received, determine that the terminal does not send data or signaling to the network device. If the seventh information sent by the terminal is received, determine that the terminal can send data or signaling to the network device. "Determine" herein may alternatively be expressed as consider (consider), assume (assume), expect (expect), anticipate, or predict.

Implementation j4: If the seventh information sent by the terminal is not received, determine that the terminal does not receive data or signaling sent by the network device. If the seventh information sent by the terminal is received, determine that the terminal receives data or signaling sent by the network device. "Determine" herein may alternatively be expressed as consider (consider), assume (assume), expect (expect), anticipate, or predict.

The seventh information indicates that the terminal can receive data or signaling sent by the network device, or indicates that the terminal can send data or signaling to the network device, or indicates that the network device can send data or signaling to the network device, or indicates that the network device receives data or signaling sent by the terminal, or indicates that the terminal is not busy, or indicates to resume communication, or indicates to resume a connection.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Manner 11: Communication between the network device and the terminal is interrupted in the second time period. The following lists several specific implementations.

Implementation k1: Skip sending data or signaling to the terminal in the second time period.

Implementation k2: Skip receiving, in the second time period, data or signaling sent by the terminal.

Implementation k3: Determine that the terminal does not send data or signaling to the network device in the second time period. "Determine" herein may alternatively be expressed as consider (consider), assume (assume), expect (expect), anticipate, or predict.

Implementation k4: Determine that the terminal does not receive, in the second time period, data or signaling sent by the network device. "Determine" herein may alternatively be expressed as consider (consider), assume (assume), expect (expect), anticipate, or predict.

Optionally, communication between the network device and the terminal may be woken up after the second time period. The following lists several specific implementations.

Implementation k5: Send data or signaling to the terminal after the second time period.

Implementation k6: Receive, after the second time period, data or signaling sent by the terminal.

Implementation k7: Determine that the terminal sends data or signaling to the network device after the second time period. "Determine" herein may alternatively be expressed as consider (consider), assume (assume), expect (expect), anticipate, or predict.

Implementation k8: Determine that the terminal receives, after the second time period, data or signaling sent by the network device. "Determine" herein may alternatively be expressed as consider (consider), assume (assume), expect (expect), anticipate, or predict.

During specific application, one or a combination of the listed implementations may be used.

Manner 12: Communication between the network device and the terminal is interrupted in the second time period, but the interruption may be woken up. The following lists several specific implementations.

Implementation 11: If the seventh information sent by the terminal is not received in the second time period, skip sending data or signaling to the terminal (or skip responding to data or signaling sent by the terminal) in the second time period. If the seventh information sent by the terminal is received in the second time period, send data or signaling to the terminal (or respond to data or signaling sent by the terminal) in the second time period. In this embodiment of this application, "if the seventh information sent by the terminal is not received" may alternatively be described as "before the seventh information sent by the terminal is received", and "if the seventh information sent by the terminal is received" may alternatively be described as "after the seventh information sent by the terminal is received". Similar descriptions are not further explained in the following.

Implementation 12: If the seventh information sent by the terminal is not received in the second time period, skip receiving, in the second time period, data or signaling sent by the terminal. If the seventh information sent by the terminal is received in the second time period, receive, in the second time period, data or signaling sent by the terminal.

Implementation 13: If the seventh information sent by the terminal is not received in the second time period, determine that the terminal does not send data or signaling to the network device in the second time period. If the seventh information sent by the terminal is received in the second time period, determine that the terminal can send data or signaling to the network device in the second time period. "Determine" herein may alternatively be expressed as consider (consider), assume (assume), expect (expect), anticipate, or predict.

Implementation 14: If the seventh information sent by the terminal is not received in the second time period, determine that the terminal does not receive, in the second time period, data or signaling sent by the network device. If the seventh information sent by the terminal is received in the second time period, determine that the terminal receives, in the second time period, data or signaling sent by the network device. "Determine" herein may alternatively be expressed as consider (consider), assume (assume), expect (expect), anticipate, or predict.

The seventh information indicates that the terminal can receive data or signaling sent by the network device, or indicates that the terminal can send data or signaling to the network device, or indicates that the network device can send data or signaling to the network device, or indicates that the network device receives data or signaling sent by the terminal, or indicates that the terminal is not busy, or indicates to resume communication, or indicates to resume a connection.

During specific application, one or a combination of the listed implementations may be used.

Manner 8, Manner 9, Manner 11, and Manner 12 all relate to the second time period. The following lists solutions for determining the second time period.

Solution D1: The terminal and the network device determine the second time period based on a time length. The second time period may use an end moment of the first time period as a start point, or use a preconfigured or predefined moment as a start point. The time length may be predefined in a protocol. The time length may be configured by the network device. Specifically, the network device sends fifth information to the terminal, and the fifth information indicates the time length. Alternatively, the time length may be determined by the terminal. Specifically, the terminal sends sixth information to the network device, and the sixth information indicates the time length.

Solution D2: The terminal may alternatively send indication information to the network device. The indication information indicates the second time period.

Solution D3: The terminal may alternatively send indication information to the network device. The indication information indicates the second time period.

Solution D4: The terminal determines the second time period, for example, uses a moment at which the terminal completes the second target operation as a start point, and then configures a time length (which may be preconfigured in a protocol), to obtain a time period. The time period is the second time period. In addition, the terminal sends a message to the network device. The message indicates the second time period or the time length of the second time period. In this way, the network device can directly determine the second time period based on the second time period indicated by the message, or indirectly determine the second time period based on the time length of the second time period indicated by the message. For example, the network device roughly determines a moment as a start point (the start point is the same as or close to the start point determined by the terminal) based on a previous status of communication with the terminal, and then may obtain the second time period with reference to the time length indicated by the message. In this way, both the terminal and the network device can determine the second time period, and perform a corresponding operation based on the second time period.

Solution E: The network device determines the second time period, for example, uses the end moment of the first time period as a start point, and then configures a time length (which may be predefined in a protocol), to obtain a time period. The time period is the second time period. In addition, the network device sends a message to the terminal to indicate the second time period, or sends a message to the terminal to indicate the time length of the second time period. In this way, the terminal can directly determine the second time period based on the second time period indicated by the message, or indirectly determine the second time period based on the length of the second time period indicated by the message. For example, the terminal determines the end moment of the first time period as a start point (the start point is the same as or close to the start point determined by the network device), and then may obtain the second time period with reference to the time length indicated by the message. In this way, both the terminal and the network device can determine the second time period, and perform a corresponding operation based on the second time period.

Solution F: The network device and the terminal determine respective second time periods. Because determining principles are the same, the second time periods obtained by the network device and the terminal are the same or similar.

According to the method in FIG. 2, if the terminal establishes the RRC connection in the first network and needs to communicate with the second network, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

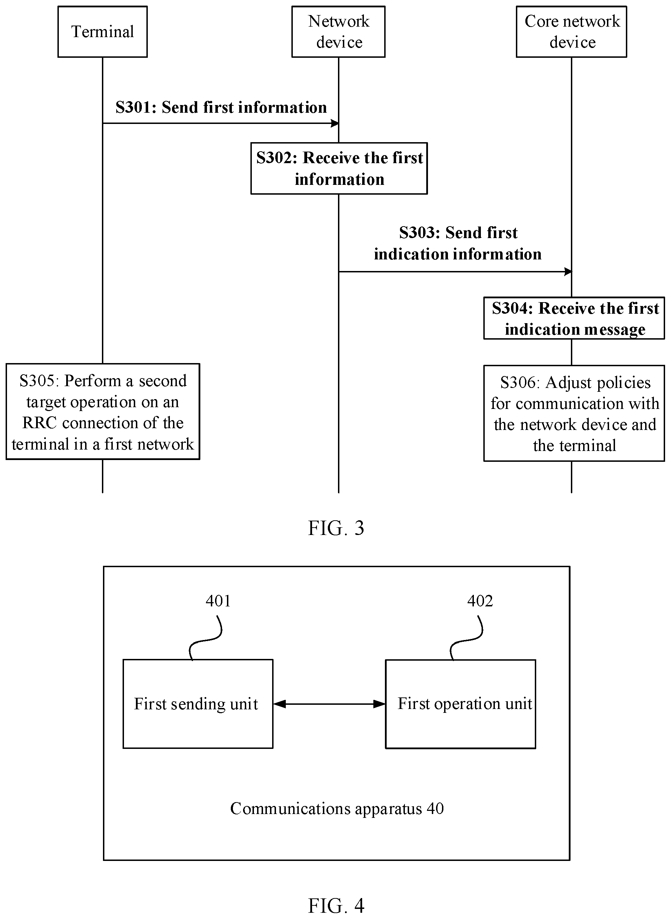

FIG. 3 shows a communications method according to an embodiment of this application. The method may be implemented based on the wireless communications system shown in FIG. 1. The method includes but is not limited to the following steps.

Step S301: A terminal sends first information to a network device in a first network.

Specifically, if the terminal establishes a connection in the first network and needs to communicate with a second network, or if the terminal establishes a connection in the first network and needs to establish a connection in the second network, or if the terminal communicates with the first network and needs to communicate with the second network, or if the terminal is in connected state in the first network and needs to enter a connected state in the second network, the terminal sends the first information to the network device in the first network. That is, before the terminal sends the first information to the network device in the first network, the terminal establishes a connection to the first network in the first network and the terminal determines that the terminal needs to communicate with the second network, or the terminal establishes a connection in the first network and needs to establish a connection in the second network, or the terminal communicates with the first network and needs to communicate with the second network, or the terminal is in connected state in the first network and needs to enter a connected state in the second network. The connection may be an RRC connection, a signaling connection, a NAS signaling connection, an AN signaling connection, a data connection, a user plane connection, or a control plane connection. Communicating with a network includes at least one of sending to the network and receiving from the network.

Specifically, the first information indicates at least one of the following:
(1) to perform a first target operation on the connection of the terminal in the first network, where the first target operation includes suspending, releasing, or pausing;
(2) that the terminal is to leave the first network;
(3) that the terminal is to establish a connection to another network;
(4) that the terminal is to establish a connection through another chip card;
(5) that the terminal is to enter a connected state in another network;
(6) that the terminal is busy; and
(7) the network not to send data or signaling to the terminal, or in other words, the network to stop sending data or signaling to the terminal.

The terminal in this embodiment of this application may be in the following states:
CM (Connection Management) connected state CM_CONNECTED:
The terminal in CM_CONNECTED state has a NAS signaling connection. If the terminal is in CM_CONNECTED and RRC non-idle state, and there is downlink data or downlink signaling for the terminal, a base station initiates paging for the terminal. The terminal needs to monitor the paging.

CM (Connection Management) idle state CM_IDLE:
The terminal in CM_IDLE state does not have a NAS signaling connection. If there is downlink data or downlink signaling for the terminal, a core network initiates paging for the terminal. The terminal needs to monitor the paging.

RRC idle state RRC_IDLE:
When the terminal is in RRC_IDLE state, if there is downlink data or downlink signaling for the terminal, a core network initiates paging for the terminal. An MME or AMF sends a paging message to a network device (for example, a base station), and the network device sends the paging message to the terminal.

The terminal in RRC_IDLE state needs to monitor the paging. If the terminal receives the paging, the terminal responds to the paging, and the terminal performs random access and enters an RRC_CONNECTED state from an IDLE state.

RRC inactive state RRC_INACTIVE:
When the terminal is in RRC_INACTIVE state, if there is downlink data or downlink signaling for the terminal, a network device (for example, a base station) pages the terminal. The terminal and the network device (for example, the base station) store an access stratum (access stratum, AS) context of the terminal.

The terminal in RRC_IDLE state needs to monitor the paging. If the terminal receives the paging, the terminal responds to the paging, and the terminal resumes an RRC connection and enters an RRC_CONNECTED state from an RRC_INACTIVE state.

RRC connected state RRC_CONNECTED:
When the terminal is in RRC_CONNECTED state, a network device (for example, a base station) may transmit data or signaling to the terminal. The terminal and the network device store an access stratum (access stratum, AS) context of the terminal.

To receive data or signaling sent by the network device (for example, the base station), the terminal further needs to send signaling such as an ACK/NACK to the network device.

The first target operation in this embodiment of this application may include suspending, releasing, or pausing. An example is described below.

If the first target operation is suspending suspend, including suspending an established radio bearer and suspending an RRC connection, the terminal enters an RRC inactive state RRC_INACTIVE from an RRC connected state RRC_CONNECTED.

If the first target operation is releasing release, including releasing an established radio bearer and all radio resources and releasing an RRC connection, the terminal enters an RRC idle state RRC_IDLE from an RRC connected state RRC_CONNECTED.

If the first target operation is pausing, including pausing communication, the terminal pauses data and signaling transmission. Optionally, after the pause, the terminal is in RRC_CONNECTED state.

Step S302: The network device receives the first information sent by the terminal.

Specifically, the network device parses (or decodes or demodulates) the first information, to learn of the content indicated by the first information. For example, the first information may indicate the following content:
(1) to perform the first target operation on the connection of the terminal in the first network, where the first target operation includes suspending, releasing, or pausing;
(2) that the terminal is to leave the first network;
(3) that the terminal is to establish a connection to another network;
(4) that the terminal is to establish a connection through another chip card;
(5) that the terminal is to enter a connected state in another network;
(6) that the terminal is busy; and
(7) the network not to send data or signaling to the terminal, or in other words, the network to stop sending data or signaling to the terminal.

Step S303: The network device sends first indication information to a core network device.

Specifically, the first indication information indicates to perform the first target operation on the RRC connection of the terminal in the first network. Optionally, the first indication information may be carried in an N2 UE context release request (N2 UE context release request).

Step S304: The core network device receives the first indication message.

Specifically, the core network device may include one or more of an MME, an AMF, and a UPF.

Specifically, the core network device parses the first indication message, to learn of content indicated by the first information. For example, the first indication information may indicate the following content:
(1) to perform the first target operation on the connection of the terminal in the first network, where the first target operation includes suspending, releasing, or pausing;
(2) that the terminal is to leave the first network;
(3) that the terminal is to establish a connection to another network;
(4) that the terminal is to establish a connection through another chip card;
(5) that the terminal is to enter a connected state in another network;
(6) that the terminal is busy; and
(7) the network not to send data or signaling to the terminal, or in other words, the network to stop sending data or signaling to the terminal.

Subsequently, a response made by the network device has the following cases:
Case 1: The first indication information may be a notification message. After learning of the content of the first indication information, the core network device does not need to feed back information to the terminal or the network device. After sending the first information, the terminal automatically performs step S305 subsequently. Optionally, the core network device may send feedback information to the network device, to notify that the core network device receives the first indication information. The feedback information may be carried in an N2 UE context release command.
Case 2: The first request message may be a request message. The core network device makes a decision after learning of the content of the first information. Optionally, the core network device may send second information to the network device. The second information may be carried in an N2 UE context release command, and the second information indicates the second target operation. Correspondingly, after obtaining the content of the second information, the network device sends a second indication message to the terminal. The second indication message indicates the second target operation. Therefore, subsequently, after receiving the second indication message, the terminal performs step S305 based on an indication of the second indication message.

Optionally, the terminal may directly send the first indication information to the core network device to indicate to perform the first target operation on the RRC connection of the terminal in the first network. Correspondingly, an operation performed by the core network device based on the first indication information sent by the terminal may be the same as the foregoing operation performed based on the first indication information sent by the network device. For example, Case 1 and Case 2 also exist. In addition, the terminal or the core network device may send indication information to the network device, to indicate to perform the second target operation on the RRC connection of the terminal in the first network. For example, the terminal sends indication information to the network device, to indicate the terminal to establish a connection in a network of the terminal other than the first network, or indicate that the terminal is busy, or indicate that the terminal cannot receive and/or send data or signaling, or indicate the network device not to send data or signaling to the terminal.

Step S305: The terminal performs the second target operation on the connection of the terminal in the first network.

Specifically, the second target operation includes suspending, releasing, or pausing. It should be noted that, in some cases, the second target operation is the first target operation, and in some cases, the second target operation may be different from the first target operation. For example, in Case 1 in step S304, the second target operation is equivalent to the first target operation. For another example, in Case 2 in step S304, the terminal requests to perform the first target operation, but the network device indicates the terminal to perform the second target operation. If the network device allows, after making a comprehensive decision based on some factors, the terminal to perform the first target operation, the second target operation is the same as the first target operation. If the network device does not allow, after making a comprehensive decision based on some factors, the terminal to perform the first target operation, the second target operation is different from the first target operation. For example, the first target operation is suspending, and the second target operation is releasing.

In this embodiment of this application, the terminal needs to use corresponding configuration information to perform the second target operation. The configuration information may be sent by the network device to the terminal. For example, the configuration information may be carried in existing information (for example, the second indication message in Case 2 in step S304) and sent to the terminal, or the configuration information may be separately sent to the terminal. In addition, a sending occasion of the configuration information is not limited either, provided that the configuration information is sent before the terminal performs the second target operation. In addition, the configuration parameter may include one or more of the following:
redirection carrier information (redirectedCarrierInfo), indicating a carrier frequency for redirection;
a cell reselection priority (cellReselectionPriorities), indicating a frequency priority during cell reselection;
a suspend configuration (suspendConfig), indicating a configuration of an RRC_INACTIVE state, used in a case in which a connection is suspended, and including the following parameters: a full I-RNTI (full inactive radio network temporary identity Inactive RNTI Radio Network Temporary Identity), a short I-RNTI (short inactive radio network temporary identity I-RNTI), a RAN paging cycle ran-PagingCycle (indicating a RAN paging cycle of UE), RAN notification area information ran-NotificationArealnfo (indicating a cell in a RAN area), and the like;
a sounding reference signal (Sounding reference signal, SRS) configuration;
a scheduling request (Scheduling Request, SR) configuration; and
a random access channel (Random Access Channel, RACH) configuration.

In this embodiment of this application, after performing the second target operation on the connection of the terminal in the first network, the terminal adjusts a policy for communication with the network device. An adjustment manner includes but is not limited to the following manners:
Manner 1: Communication between the terminal and the network device or the core network device is interrupted, but the interruption may be woken up. The following lists several specific implementations.

Implementation a1: If the terminal does not send seventh information to the network device or the core network device, skip sending data or signaling to the network device or the core network device (or skip responding to data or signaling sent by the network device or the core network device). If the terminal sends the seventh information to the network device or the core network device, send data or signaling to the network device or the core network device (or respond to data or signaling sent by the network device or the core network device). In this embodiment of this application, "if the terminal does not send seventh information to the network device or the core network device" may be alternatively described as "before the terminal sends the seventh information to the network device or the core network device", and "if the terminal sends the seventh information to the network device or the core network device" may be alternatively described as "after the terminal sends the seventh information to the network device or the core network device". Similar descriptions are not further explained in the following.

Implementation a2: If the terminal does not send the seventh information to the network device or the core network device, skip receiving data or signaling sent by the network device or the core network device. If the terminal sends the seventh information to the network device or the core network device, receive data or signaling sent by the network device or the core network device.

Implementation a3: If the terminal does not send the seventh information to the network device or the core network device, determine that the network device or the core network device does not send data or signaling to the terminal. If the terminal sends the seventh information to the network device or the core network device, determine that the network device or the core network device can send data or signaling to the terminal. "Determine" herein may alternatively be expressed as consider (consider), assume (assume), expect (expect), anticipate, or predict.

Implementation a4: If the terminal does not send the seventh information to the network device or the core network device, determine that the network device or the core network device does not receive data or signaling sent by the terminal. If the terminal sends the seventh information to the network device or the core network device, determine that the network device or the core network device receives data or signaling sent by the terminal. "Determine" herein may alternatively be expressed as consider (consider), assume (assume), expect (expect), anticipate, or predict.

The seventh information indicates that the terminal can receive data or signaling sent by the network device or the core network device, or indicates that the terminal can send data or signaling to the network device or the core network device, or indicates that the terminal is not busy.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Manner 2: Communication between the terminal and the network device or the core network device is interrupted in a first time period. The following lists several specific implementations.

Implementation b1: Skip sending data or signaling to the network device or the core network device in the first time period.

Implementation b2: Skip receiving, in the first time period, data or signaling sent by the network device or the core network device.

Implementation b3: Determine that the network device or the core network device does not send data or signaling to the terminal in the first time period. "Determine" herein may alternatively be expressed as consider (consider), assume (assume), expect (expect), anticipate, or predict. "Determine" herein may alternatively be expressed as consider (consider), assume (assume), expect (expect), anticipate, or predict.

Implementation b4: Determine that the network device or the core network device does not receive, in the first time period, data or signaling sent by the terminal. "Determine" herein may alternatively be expressed as consider (consider), assume (assume), expect (expect), anticipate, or predict. "Determine" herein may alternatively be expressed as consider (consider), assume (assume), expect (expect), anticipate, or predict.

Optionally, the communication between the terminal and the network device or the core network device may be woken up after the first time period. The following lists several specific implementations.

Implementation b5: Send data or signaling to the network device or the core network device after the first time period.

Implementation b6: Receive, after the first time period, data or signaling sent by the network device or the core network device.

Implementation b7: Determine that the network device or the core network device sends data or signaling to the terminal after the first time period. "Determine" herein may alternatively be expressed as consider (consider), assume (assume), expect (expect), anticipate, or predict.

Implementation b8: Determine that the network device or the core network device receives, after the first time period, data or signaling sent by the terminal. "Determine" herein may alternatively be expressed as consider (consider), assume (assume), expect (expect), anticipate, or predict.

During specific application, one or a combination of the listed implementations may be used.

Manner 3: Communication between the terminal and the network device or the core network device is interrupted in the first time period, but the interruption may be woken up. The following lists several specific implementations.

Implementation c1: If the terminal does not send seventh information to the network device or the core network device in the first time period, skip sending data or signaling to the network device or the core network device (or skip responding to data or signaling sent by the network device or the core network device) in the first time period. If the terminal sends the seventh information to the network device or the core network device in the first time period, send data or signaling to the network device or the core network device (or respond to data or signaling sent by the network device or the core network device) in the first time period. In this embodiment of this application, "if the terminal does not send seventh information to the network device or the core network device" may be alternatively described as "before the terminal sends the seventh information to the network device or the core network device", and "if the terminal sends the seventh information to the network device or the core network device" may be alternatively described as "after the terminal sends the seventh information to the network device or the core network device". Similar descriptions are not further explained in the following.

Implementation c2: If the terminal does not send the seventh information to the network device or the core network device in the first time period, skip receiving, in the first time period, data or signaling sent by the network device or the core network device. If the terminal sends the seventh information to the network device or the core network device in the first time period, receive, in the first time period, data or signaling sent by the network device or the core network device.

Implementation c3: If the terminal does not send the seventh information to the network device or the core network device in the first time period, determine that the network device or the core network device does not send data or signaling to the terminal in the first time period. If the terminal sends the seventh information to the network device or the core network device in the first time period, determine that the network device or the core network device can send data or signaling to the terminal in the first time period. "Determine" herein may alternatively be expressed as consider (consider), assume (assume), expect (expect), anticipate, or predict.

Implementation c4: If the terminal does not send the seventh information to the network device or the core network device in the first time period, determine that the network device or the core network device does not receive, in the first time period, data or signaling sent by the terminal. If the terminal sends the seventh information to the network device or the core network device in the first time period, determine that the network device or the core network device receives, in the first time period, data or signaling sent by the terminal. "Determine" herein may alternatively be expressed as consider (consider), assume (assume), expect (expect), anticipate, or predict.

The seventh information indicates that the terminal can receive data or signaling sent by the network device or the core network device, or indicates that the terminal can send data or signaling to the network device or the core network device, or indicates that the terminal is not busy.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Step S306: The core network device adjusts policies for communication with the network device and the terminal. An adjustment manner includes but is not limited to the following manners.

Manner 4: Communication between the terminal and the core network device is interrupted, but the interruption may be woken up. The following lists several specific implementations.

Implementation d1: If the seventh information sent by the terminal or the network device is not received, skip sending or triggering data or signaling of the terminal (or skip responding to data or signaling of the terminal). If the seventh information sent by the terminal or the network device is received, send data or signaling of the terminal (or respond to data or signaling of the terminal). In this embodiment of this application, "if the seventh information sent by the terminal or the network device is not received" may alternatively be described as "before the seventh information sent by the terminal or the network device is received", and "if the seventh information sent by the terminal or the network device is received" may alternatively be described as "after the seventh information sent by the terminal or the network device is received". Similar descriptions are not further explained in the following.

Implementation d2: If the seventh information sent by the terminal or the network device is not received, skip receiving data or signaling of the terminal. If the seventh information sent by the terminal or the network device is received, receive data or signaling of the terminal.

Implementation d3: If the seventh information sent by the terminal or the network device is not received, determine that the terminal does not send data or signaling to the network device or the core network device. If the seventh information sent by the terminal or the network device is received, determine that the terminal can send data or signaling to the network device or the core network device. "Determine" herein may alternatively be expressed as consider (consider), assume (assume), expect (expect), anticipate, or predict.

Implementation d4: If the seventh information sent by the terminal or the network device is not received, determine that the terminal does not receive data or signaling sent by the network device or the core network device. If the seventh information sent by the terminal or the network device is received, determine that the terminal receives data or signaling sent by the network device or the core network device. "Determine" herein may alternatively be expressed as consider (consider), assume (assume), expect (expect), anticipate, or predict.

The seventh information indicates that the terminal can receive data or signaling sent by the network device or the core network device, or indicates that the terminal can send data or signaling to the network device or the core network device, or indicates that the terminal is not busy.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Manner 5: Communication between the terminal and the core network is interrupted in a first time period. The following lists several specific implementations.

Implementation e1: Skip sending data or signaling of the terminal in the first time period.

Implementation e2: Skip receiving data or signaling of the terminal in the first time period.

Implementation e3: Determine that the terminal does not send data or signaling to the network device or the core network device in the first time period. "Determine" herein may alternatively be expressed as consider (consider), assume (assume), expect (expect), anticipate, or predict.

Implementation e4: Determine that the terminal does not receive, in the first time period, data or signaling sent by the network device or the core network device. "Determine" herein may alternatively be expressed as consider (consider), assume (assume), expect (expect), anticipate, or predict.

Optionally, the communication between the terminal and the core network may be woken up after the first time period. The following lists several specific implementations.

Implementation e5: Send data or signaling of the terminal after the first time period.

Implementation e6: Receive data or signaling of the terminal after the first time period.

Implementation e7: Determine that the terminal sends data or signaling to the network device or the core network device after the first time period. "Determine" herein may alternatively be expressed as consider (consider), assume (assume), expect (expect), anticipate, or predict.

Implementation e8: Determine that the terminal receives, after the first time period, data or signaling sent by the network device or the core network device. "Determine" herein may alternatively be expressed as consider (consider), assume (assume), expect (expect), anticipate, or predict.

During specific application, one or a combination of the listed implementations may be used.

Manner 6: Communication between the terminal and the core network is interrupted in the first time period, but the interruption may be woken up. The following lists several specific implementations.

Implementation f1: If the seventh information sent by the terminal or the network device is not received in the first time period, skip sending or triggering data or signaling of the terminal (or skip responding to data or signaling of the terminal) in the first time period. If the seventh information sent by the terminal or the network device is received in the first time period, send data or signaling of the terminal (or respond to data or signaling of the terminal) in the first time period. In this embodiment of this application, "if the seventh information sent by the terminal or the network device is not received" may alternatively be described as "before the seventh information sent by the terminal or the network device is received", and "if the seventh information sent by the terminal or the network device is received" may alternatively be described as "after the seventh information sent by the terminal or the network device is received". Similar descriptions are not further explained in the following.

Implementation f2: If the seventh information of the terminal or the network device is not received in the first time period, skip receiving data or signaling of the terminal in the first time period. If the seventh information sent by the terminal or the network device is received in the first time period, receive data or signaling of the terminal in the first time period.

Implementation f3: If the seventh information sent by the terminal or the network device is not received in the first time period, determine that the terminal does not send data or signaling to the network device or the core network device in the first time period. If the seventh information sent by the terminal or the network device is received in the first time period, determine that the terminal can send data or signaling to the network device or the core network device in the first time period. "Determine" herein may alternatively be expressed as consider (consider), assume (assume), expect (expect), anticipate, or predict.

Implementation f4: If the seventh information sent by the terminal or the network device is not received in the first time period, determine that the terminal does not receive, in the first time period, data or signaling sent by the network device or the core network device. If the seventh information sent by the terminal or the network device is received in the first time period, determine that the terminal receives, in the first time period, data or signaling sent by the network device or the core network device. "Determine" herein may alternatively be expressed as consider (consider), assume (assume), expect (expect), anticipate, or predict.

The seventh information indicates that the terminal can receive data or signaling sent by the network device or the core network device, or indicates that the terminal can send data or signaling to the network device or the core network device, or indicates that the terminal is not busy.

During specific application, one or a combination of the listed implementations may be used.

Manner 2, Manner 3, Manner 5, and Manner 6 all relate to the first time period. The following lists solutions for determining the first time period.

Solution A1: The terminal and the core network device determine the first time period based on a time length. The first time period may use a moment at which the core network device receives the first indication information as a start point, or use a preconfigured or predefined moment as a start point. The time length may be predefined in a protocol. The time length may be configured by the network device. Specifically, the core network device sends a message to the network device, to indicate the time length. Correspondingly, the network device sends fifth information to the terminal, and the fifth information indicates the time length. Alternatively, the time length may be determined by the terminal. Specifically, the terminal sends sixth information to the network device, and the sixth information indicates the time length. Correspondingly, the network device sends information to the core network device, to indicate the time length.

Solution A2: The terminal may alternatively send indication information to the network device, and the indication information indicates the first time period. Correspondingly, the network device sends the indication information to the core network device, to indicate the first time period.

Solution A3: The core network device may alternatively send indication information to the network device, and the indication information indicates the first time period. Correspondingly, the network device sends the indication information to the terminal, to indicate the first time period.

Solution A4: The terminal determines the first time period, for example, uses a moment at which the terminal completes the second target operation as a start point, and then configures a time length (which may be preconfigured in a protocol), to obtain a time period. The time period is the first time period. In addition, the terminal sends the sixth information to the network device. The sixth information indicates the first time period or a time length of the first time period. Correspondingly, the network device sends a message to the core network device, to indicate the first time period or the time length of the first time period. In this way, the core network device can directly determine the first time period based on the first time period indicated by the message, or indirectly determine the first time period based on the time length of the first time period indicated by the message. For example, the core network device roughly determines a moment as a start point (the start point is the same as or close to the start point determined by the terminal) based on previous statuses of communication with the terminal and the network device, and then may obtain the first time period with reference to the time length indicated by the received message. In this way, both the terminal and the core network device can determine the first time period, and perform a corresponding operation based on the first time period.

Solution A5: The terminal determines the first time period, for example, uses a moment at which the terminal completes the second target operation as a start point, and then configures a time length (which may be preconfigured in a protocol), to obtain a time period. The time period is the first time period. In addition, the terminal sends a message to the core network device, to indicate the first time period or the time length of the first time period. In this way, the core network device can directly determine the first time period based on the first time period indicated by the message, or indirectly determine the first time period based on the time length of the first time period indicated by the message. For example, the core network device roughly determines a moment as a start point (the start point is the same as or close to the start point determined by the terminal) based on previous statuses of communication with the terminal and the network device, and then may obtain the first time period with reference to the time length indicated by the received message. In this way, both the terminal and the core network device can determine the first time period, and perform a corresponding operation based on the first time period.

Solution B1: The network device determines the first time period. For example, the network device uses a moment at which the network device receives the first information as a start point, and then configures a time length (which may be predefined in a protocol), to obtain a time period. The time period is the first time period. Then, the network device sends a message to the terminal and the core network device to indicate the first time period or the time length of the first time period. Correspondingly, both the terminal and the core network device may determine the first time period based on the first time period or the time length indicated by the message, and perform a corresponding operation based on the first time period.

Solution B2: The core network device determines the first time period. For example, the core network device uses a start moment at which the core network device receives the first indication information as a start point, and then configures a time length (which may be predefined in a protocol), to obtain a time period. The time period is the first time period. Then, the core network device sends a message to the network device to indicate the first time period or the time length of the first time period. Correspondingly, the network device sends a message to the terminal to indicate the first time period or the time length of the first time period. Then, the terminal may determine the first time period based on the first time period or the time length indicated by the message. In this way, both the terminal and the core network device can determine the first time period, and perform a corresponding operation based on the first time period.

Solution C: The core network device and the terminal determine respective first time periods. Because determining principles are the same, the first time periods obtained by the core network device and the terminal are the same or similar.

In an optional solution, the core network device includes an AMF, an SMF, and a UPF.

Optionally, when the AMF obtains the first indication information and sends, to the SMF, the content indicated by the first indication information, the AMF and the SMF do not send signaling of the terminal, or do not send signaling of the terminal in a first preset time period.

Optionally, when the AMF obtains the first indication information and sends, to the SMF, the content indicated by the first indication information, the SMF sends the content indicated by the first indication information to the UPF, and then the UPF does not send data of the terminal, or does not send data of the terminal in the first preset time period.

In this embodiment of this application, if the second target operation is pausing, the method may further include the following steps:
Step S307: The terminal performs a third target operation on the RRC connection of the terminal in the first network after the first time period.

The third target operation includes suspending or releasing. Specifically, whether the third target operation includes suspending or releasing may be preconfigured by the network device or the core network device.

Optionally, if the terminal does not send indication information to the network device or the core network device in the first time period, the terminal performs the third target operation on the RRC connection of the terminal in the first network after the first time period.

Optionally, if the terminal determines that the terminal cannot communicate with the network device when the first time period ends, the terminal performs the third target operation on the RRC connection of the terminal in the first network after the first time period.

In this embodiment of this application, after performing the third target operation on the RRC connection of the terminal in the first network, the terminal adjusts a policy for communication with the network device. An adjustment manner includes but is not limited to the following manners:
Manner 7: Communication between the terminal and the network device or the core network device is interrupted, but the interruption may be woken up. The following lists several specific implementations.

Implementation g1: If the terminal does not send seventh information to the network device or the core network device, skip sending data or signaling to the network device or the core network device (or skip responding to data or signaling sent by the network device or the core network device). If the terminal sends the seventh information to the network device or the core network device, send data or signaling to the network device or the core network device (or respond to data or signaling sent by the network device or the core network device). In this embodiment of this application, "if the terminal does not send seventh information to the network device or the core network device" may be alternatively described as "before the terminal sends the seventh information to the network device or the core network device", and "if the terminal sends the seventh information to the network device or the core network device" may be alternatively described as "after the terminal sends the seventh information to the network device or the core network device". Similar descriptions are not further explained in the following.

Implementation g2: If the terminal does not send the seventh information to the network device or the core network device, skip receiving data or signaling sent by the network device or the core network device. If the terminal sends the seventh information to the network device or the core network device, receive data or signaling sent by the network device or the core network device.

Implementation g3: If the terminal does not send the seventh information to the network device or the core network device, determine that the network device or the core network device does not send data or signaling to the terminal. If the terminal sends the seventh information to the network device, determine that the network device or the core network device can send data or signaling to the terminal. "Determine" herein may alternatively be expressed as consider (consider), assume (assume), expect (expect), anticipate, or predict.

Implementation g4: If the terminal does not send the seventh information to the network device or the core network device, determine that the network device or the core network device does not receive data or signaling sent by the terminal. If the terminal sends the seventh information to the network device or the core network device, determine that the network device or the core network device receives data or signaling sent by the terminal. "Determine" herein may alternatively be expressed as consider (consider), assume (assume), expect (expect), anticipate, or predict.

The seventh information indicates that the terminal can receive data or signaling sent by the network device or the core network device, or indicates that the terminal can send data or signaling to the network device or the core network device, or indicates that the terminal is not busy.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Manner 8: Communication between the terminal and the network device or the core network device is interrupted in a second time period. The following lists several specific implementations.

Implementation h1: Skip sending data or signaling to the network device or the core network device in the second time period.

Implementation h2: Skip receiving, in the second time period, data or signaling sent by the network device or the core network device.

Implementation h3: Determine that the network device or the network device does not send data or signaling to the terminal in the second time period. "Determine" herein may alternatively be expressed as consider (consider), assume (assume), expect (expect), anticipate, or predict.

Implementation h4: Determine that the network device or the core network device does not receive, in the second time period, data or signaling sent by the terminal. "Determine" herein may alternatively be expressed as consider (consider), assume (assume), expect (expect), anticipate, or predict.

Optionally, the communication between the terminal and the network device or the core network device may be woken up after the second time period. The following lists several specific implementations.

Implementation h5: Send data or signaling to the network device or the core network device after the second time period.

Implementation h6: Skip receiving, in the second time period, data or signaling sent by the network device or the core network device.

Implementation h7: Determine that the network device or the network device sends data or signaling to the terminal after the second time period. "Determine" herein may alternatively be expressed as consider (consider), assume (assume), expect (expect), anticipate, or predict.

Implementation h8: Determine that the network device or the core network device receives, after the second time period, data or signaling sent by the terminal. "Determine" herein may alternatively be expressed as consider (consider), assume (assume), expect (expect), anticipate, or predict.

During specific application, one or a combination of the listed implementations may be used.

Manner 9: Communication between the terminal and the network device or the core network device is interrupted in the second time period, but the interruption may be woken up. The following lists several specific implementations.

Implementation i1: If the terminal does not send seventh information to the network device or the core network device in the second time period, skip sending data or signaling to the network device or the core network device (or skip responding to data or signaling sent by the network device or the core network device) in the second time period. If the terminal sends the seventh information to the network device or the core network device in the second time period, send data or signaling to the network device or the core network device (or respond to data or signaling sent by the network device or the core network device) in the second time period. In this embodiment of this application, "if the terminal does not send seventh information to the network device or the core network device" may be alternatively described as "before the terminal sends the seventh information to the network device or the core network device", and "if the terminal sends the seventh information to the network device or the core network device" may be alternatively described as "after the terminal sends the seventh information to the network device or the core network device". Similar descriptions are not further explained in the following.

Implementation i2: If the terminal does not send the seventh information to the network device or the core network device in the second time period, skip receiving, in the second time period, data or signaling sent by the network device or the core network device. If the terminal sends the seventh information to the network device or the core network device in the second time period, receive, in the second time period, data or signaling sent by the network device or the core network device.

Implementation i3: If the terminal does not send the seventh information to the network device or the core network device in the second time period, determine that the network device or the core network device does not send data or signaling to the terminal in the second time period. If the terminal sends the seventh information to the network device or the core network device in the second time period, determine that the network device or the core network device can send data or signaling to the terminal in the second time period. "Determine" herein may alternatively be expressed as consider (consider), assume (assume), expect (expect), anticipate, or predict.

Implementation i4: If the terminal does not send the seventh information to the network device or the core network device in the second time period, determine that the network device or the core network device does not receive, in the second time period, data or signaling sent by the terminal. If the terminal sends the seventh information to the network device or the core network device in the second time period, determine that the network device or the core network device receives, in the second time period, data or signaling sent by the terminal. "Determine" herein may alternatively be expressed as consider (consider), assume (assume), expect (expect), anticipate, or predict.

The seventh information indicates that the terminal can receive data or signaling sent by the network device or the core network device, or indicates that the terminal can send data or signaling to the network device or the core network device, or indicates that the terminal is not busy.

During specific application, one or a combination of the listed implementations may be used.

Step S308: The core network device adjusts policies for communication with the network device and the terminal. An adjustment manner includes but is not limited to the following manners.

Manner 10: Communication between the core network device and the terminal is interrupted, but the interruption may be woken up. The following lists several specific implementations.

Implementation j 1: If the seventh information sent by the terminal or the network device is not received, skip sending data or signaling of the terminal (or skip responding to data or signaling of the terminal). If the seventh information sent by the terminal or the network device is received, send data or signaling of the terminal (or respond to data or signaling of the terminal). In this embodiment of this application, "if the seventh information sent by the terminal or the network device is not received" may alternatively be described as "before the seventh information sent by the terminal or the network device is received", and "if the seventh information sent by the terminal or the network device is received" may alternatively be described as "after the seventh information sent by the terminal or the network device is received". Similar descriptions are not further explained in the following.

Implementation j2: If the seventh information sent by the terminal or the network device is not received, skip receiving data or signaling of the terminal. If the seventh information sent by the terminal or the network device is received, receive data or signaling of the terminal.

Implementation j3: If the seventh information sent by the terminal or the network device is not received, determine that the terminal does not send data or signaling to the network device or the core network device. If the seventh information sent by the terminal or the network device is received, determine that the terminal can send data or signaling to the network device or the core network device. "Determine" herein may alternatively be expressed as consider (consider), assume (assume), expect (expect), anticipate, or predict.

Implementation j4: If the seventh information sent by the terminal or the network device is not received, determine that the terminal does not receive data or signaling sent by the network device or the core network device. If the seventh information sent by the terminal or the network device is received, determine that the terminal receives data or signaling sent by the network device or the core network device. "Determine" herein may alternatively be expressed as consider (consider), assume (assume), expect (expect), anticipate, or predict.

The seventh information indicates that the terminal can receive data or signaling sent by the network device or the core network device, or indicates that the terminal can send data or signaling to the network device or the core network device, or indicates that the terminal is not busy.

During specific application, one or a combination of the listed implementations may be used.

Optionally, the seventh information may be carried in a sounding reference signal (sounding reference signal, SRS), a scheduling request (scheduling request, SR), random access (random access channel) signaling, an RRC connection resume (RRC connection resume) request, or another message.

Optionally, the seventh information may be carried in a MAC CE, an RRC message, or a NAS message.

Manner 11: Communication between the core network device and the terminal is interrupted in the second time period. The following lists several specific implementations.

Implementation k1: Skip sending data or signaling of the terminal in the second time period.

Implementation k2: Skip receiving data or signaling of the terminal in the second time period.

Implementation k3: Determine that the terminal does not send data or signaling to the network device or the core network device in the second time period. "Determine" herein may alternatively be expressed as consider (consider), assume (assume), expect (expect), anticipate, or predict.

Implementation k4: Determine that the terminal does not receive, in the second time period, data or signaling sent by the network device or the core network device. "Determine" herein may alternatively be expressed as consider (consider), assume (assume), expect (expect), anticipate, or predict.

Optionally, the communication between the core network device and the terminal may be woken up after the second time period. The following lists several specific implementations.

Implementation k5: Send data or signaling of the terminal after the second time period.

Implementation k6: Receive data or signaling of the terminal after the second time period.

Implementation k7: Determine that the terminal sends data or signaling to the network device or the core network device after the second time period. "Determine" herein may alternatively be expressed as consider (consider), assume (assume), expect (expect), anticipate, or predict.

Implementation k8: Determine that the terminal receives, after the second time period, data or signaling sent by the network device or the core network device. "Determine" herein may alternatively be expressed as consider (consider), assume (assume), expect (expect), anticipate, or predict.

During specific application, one or a combination of the listed implementations may be used.

Manner 12: Communication between the core network device and the terminal is interrupted in the second time period, but the interruption may be woken up. The following lists several specific implementations.

Implementation 11: If the seventh information sent by the terminal or the network device is not received in the second time period, skip sending or triggering data or signaling of the terminal (or skip responding to data or signaling of the terminal) in the second time period. If the seventh information sent by the terminal or the network device is received in the second time period, send data or signaling of the terminal (or respond to data or signaling of the terminal) in the second time period. In this embodiment of this application, "if the seventh information sent by the terminal or the network device is not received" may alternatively be described as "before the seventh information sent by the terminal or the network device is received", and "if the seventh information sent by the terminal or the network device is received" may alternatively be described as "after the seventh information sent by the terminal or the network device is received". Similar descriptions are not further explained in the following.

Implementation 12: If the seventh information of the terminal or the network device is not received in the second time period, skip receiving data or signaling of the terminal in the second time period. If the seventh information sent by the terminal or the network device is received in the second time period, receive data or signaling of the terminal in the second time period.

Implementation 13: If the seventh information sent by the terminal or the network device is not received in the second time period, determine that the terminal does not send data or signaling to the network device or the core network device in the second time period. If the seventh information sent by the terminal or the network device is received in the second time period, determine that the terminal can send data or signaling to the network device or the core network device in the second time period. "Determine" herein may alternatively be expressed as consider (consider), assume (assume), expect (expect), anticipate, or predict.

Implementation 14: If the seventh information sent by the terminal or the network device is not received in the second time period, determine that the terminal does not receive, in the second time period, data or signaling sent by the network device or the core network device. If the seventh information sent by the terminal or the network device is received in the second time period, determine that the terminal receives, in the second time period, data or signaling sent by the network device or the core network device. "Determine" herein may alternatively be expressed as consider (consider), assume (assume), expect (expect), anticipate, or predict.

The seventh information indicates that the terminal can receive data or signaling sent by the network device or the core network device, or indicates that the terminal can send data or signaling to the network device or the core network device, or indicates that the terminal is not busy.

During specific application, one or a combination of the listed implementations may be used.

Manner 8, Manner 9, Manner 11, and Manner 12 all relate to the second time period. The following lists solutions for determining the second time period.

Solution D1: The terminal and the core network device determine the second time period based on a time length. The second time period may use an end moment of the first time period as a start point, or use a preconfigured or predefined moment as a start point. The time length may be predefined in a protocol. The time length may be configured by the network device. Specifically, the core network device sends indication information to the network device, to indicate the time length. Correspondingly, the network device sends fifth information to the terminal, and the fifth information indicates the time length. Alternatively, the time length may be determined by the terminal. Specifically, the terminal sends sixth information to the network device, and the sixth information indicates the time length. Further, the network device sends information to the core network device, to indicate the time length.

Solution D2: The terminal may alternatively send indication information to the network device, and the indication information indicates the second time period. Correspondingly, the network device sends the indication information to the core network device, to indicate the second time period.

Solution D3: The core network device may alternatively send indication information to the network device, and the indication information indicates the second time period. Correspondingly, the network device sends the indication information to the terminal, to indicate the second time period.

Solution D4: The terminal determines the second time period, for example, uses a moment at which the terminal completes the third target operation as a start point, and then configures a time length (which may be preconfigured in a protocol), to obtain a time period. The time period is the second time period. In addition, the terminal sends the information to the network device. The information indicates the second time period or the time length of the second time period. Correspondingly, the network device sends a message to the core network device, to indicate the second time period or the time length of the second time period. In this way, the core network device can directly determine the second time period based on the second time period indicated by the message, or indirectly determine the second time period based on the time length of the second time period indicated by the message. For example, the core network device roughly determines a moment as a start point (the start point is the same as or close to the start point determined by the terminal) based on previous statuses of communication with the terminal and the network device, and then may obtain the second time period with reference to the time length indicated by the received message. In this way, both the terminal and the core network device can determine the second time period, and perform a corresponding operation based on the second time period.

Solution E1: The network device determines the second time period. Then, the network device sends a message to the terminal and the core network device to indicate the second time period or the time length of the second time period. Correspondingly, both the terminal and the core network device may determine the second time period based on the second time period or the time length indicated by the message, and perform a corresponding operation based on the second time period.

Solution E2: The core network device determines the second time period. For example, the core network device uses a moment at which the core network device starts to perform the third target operation as a start point, and then configures a time length (which may be predefined in a protocol), to obtain a time period. The time period is the second time period. Then, the core network device sends a message to the network device to indicate the second time period or the time length of the second time period. Correspondingly, the network device sends a message to the terminal to indicate the second time period or the time length of the second time period. Then, the terminal may determine the second time period based on the second time period or the time length indicated by the message. In this way, both the terminal and the core network device can determine the second time period, and perform a corresponding operation based on the second time period.

Solution F: The core network device and the terminal determine respective second time periods. Because determining principles are the same, the second time periods obtained by the core network device and the terminal are the same or similar.

It should be noted that optionally, that the network device (for example, an access network device) or the core network device (for example, an AMF, an SMF, or a UPF) does not send or receive data of the terminal may mean that the network device or the core network device does not send or receive data corresponding to one or more PDU sessions (PDU session) of the terminal, or does not send or receive data corresponding to one or more quality of service flows (QoS flow) of the terminal, or does not send or receive data corresponding to one or more data radio bearers (data radio bearer, DRB) of the terminal, or does not send or receive data corresponding to one or more services of the terminal. The service may be a telephone service, a voice telephone service, a video telephone service, a short message service, an IP multimedia subsystem (IP Multimedia Subsystem, IMS) service, a data service, or an unstructured supplementary service data (Unstructured Supplementary Service Data, USSD) service. Optionally, in a 4G core network, the AMF/SMF may be replaced with a mobility management entity function (Mobility Management Entity function, MME), and the UPF may be replaced with a serving gateway (serving gateway, SGW) and a PDN gateway (PDN gateway, PGW).

According to the method in FIG. 3, if the terminal establishes the RRC connection in the first network and needs to communicate with the second network, the terminal sends the first information to the network device in the first network, to indicate or request the network device to suspend, pause, or release the RRC connection of the terminal in the first network. The network device further sends the first indication information to the core network device, to indicate or request the core network device to suspend, pause, or release the RRC connection of the terminal in the first network. In this way, the core network device can accurately learn of a current communication state of the terminal. This can reduce cases of incorrectly determining the communication state as a connected state, an idle state, or an inactive state, and reduce a waste of network resources.

For ease of understanding, the following further provides some optional embodiments.

Embodiment 1: Embodiments of this application provide a communications method. The method is performed by a terminal. The method includes:
sending first information to a network device in a first network, where the first information indicates to perform a first target operation on a radio resource control RRC connection of the terminal in the first network, and the first target operation includes suspending, releasing, or pausing; and
performing a second target operation on the RRC connection of the terminal in the first network, where the second target operation includes suspending, releasing, or pausing.

According to the foregoing method, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

Embodiment 2: According to the method in Embodiment 1, if the terminal establishes the RRC connection in the first network and needs to communicate with a second network, the terminal performs the operation of sending the first information to the network device in the first network.

It may be understood that, when the terminal has a capability of connecting to the first network and a capability of connecting to the second network, a case in which the terminal has established the RRC connection in the first network and needs to communicate with the second network often occurs. In this case, the terminal sends the first information to the network device in the first network, to indicate or request the network device to suspend, pause, or release the RRC connection of the terminal in the first network. In this way, the network device can accurately learn of a current communication state of the terminal. This can significantly reduce cases of incorrectly determining the communication state as a connected state, an idle state, or an inactive state, and significantly reduce a waste of network resources.

Embodiment 3: According to the method in Embodiment 1 or 2, after the sending first information to a network device in a first network, and before the performing a second target operation on the RRC connection of the terminal in the first network, the method further includes:
receiving second information sent by the network device, where the second information indicates the second target operation.

Embodiment 4: According to the method in Embodiment 3, the second information includes or indicates configuration information required by the second target operation.

Embodiment 5: According to the method in any one of Embodiments 1 to 3, before the performing a second target operation on the RRC connection of the terminal in the first network, the method further includes:
receiving the configuration information that is sent by the network device and that is required to indicate the terminal to perform the second target operation.

Embodiment 6: According to the method in any one of Embodiments 1 to 5, after the performing a second target operation on the RRC connection of the terminal in the first network, the method further includes:
if seventh information is not sent to the network device in a first time period, skipping sending data or signaling to the network device in the first time period; or
if the seventh information is not sent to the network device in the first time period, skipping receiving, in the first time period, data or signaling sent by the network device; or
if the seventh information is not sent to the network device in the first time period, determining that the network device does not send data or signaling to the terminal in the first time period; or
if the seventh information is not sent to the network device in the first time period, determining that the network device does not receive, in the first time period, data or signaling sent by the terminal, where
the seventh information indicates that the terminal can receive data or signaling sent by the network device, or indicates that the terminal can send data or signaling to the network device, or indicates that the terminal is not busy.

It may be understood that, if the seventh message is not sent to the network device, it indicates that the terminal cannot receive data or signaling sent by the network device, or the terminal cannot send data or signaling to the network device, or the terminal is busy. Therefore, the terminal does not communicate with the network device, to avoid a waste of network resources.

Embodiment 7: According to the method in any one of Embodiments 1 to 6, after the performing a second target operation on the RRC connection of the terminal in the first network, the method further includes:
if the seventh information is sent to the network device, sending data or signaling to the network device; or
if the seventh information is sent to the network device, receiving data or signaling sent by the network device; or
if the seventh information is sent to the network device, determining that the network device can send data or signaling to the terminal; or
if the seventh information is sent to the network device, determining that the network device receives data or signaling sent by the terminal, where
the seventh information indicates that the terminal can receive data or signaling sent by the network device, or indicates that the terminal can send data or signaling to the network device, or indicates that the terminal is not busy.

It may be understood that, if the seventh message is sent to the network device, it indicates that the terminal can receive data or signaling sent by the network device, or the terminal can send data or signaling to the network device, or the terminal is not busy. Therefore, the terminal starts to communicate with the network device, to effectively ensure that a service of the terminal is performed in the first network.

Embodiment 8: According to the method in any one of Embodiments 1 to 5, after the performing a second target operation on the RRC connection of the terminal in the first network, the method further includes:
skipping sending data or signaling to the network device in a first time period; or
skipping receiving, in the first time period, data or signaling sent by the network device; or
determining that the network device does not send data or signaling to the terminal in the first time period; or
determining that the network device does not receive, in the first time period, data or signaling sent by the terminal.

It may be understood that the terminal does not communicate with the network device after performing the second target operation, to avoid a waste of network resources.

Embodiment 9: According to the method in any one of Embodiments 6 to 8, the first time period is indicated by the network device by using fourth information, or is determined by the terminal based on a time length indicated by the network device by using fifth information.

Embodiment 10: According to the method in any one of Embodiments 6 to 8, the method further includes:
determining the first time period; and
sending sixth information to the network device, where the sixth information indicates the first time period or a time length of the first time period.

Embodiment 11: According to the method in any one of Embodiments 6 to 10, if the target operation is pausing, after the performing a second target operation on the RRC connection of the terminal in the first network, the method further includes:
performing a third target operation on the RRC connection of the terminal in the first network after the first time period, where the third target operation includes suspending or releasing.

It may be understood that, if the RRC connection of the terminal in the first network is paused, and the terminal is still busy after the first time period, the RRC connection of the terminal in the first network is directly released or suspended, to further reduce a waste of network resources.

Embodiment 12: According to the method in Embodiment 11, after the performing a third target operation on the RRC connection of the terminal in the first network after the first time period, the method further includes:
skipping sending data or signaling to the network device in a second time period; or
skipping receiving, in the second time period, data or signaling sent by the network device; or
determining that the network device does not send data or signaling to the terminal in the second time period; or
determining that the network device does not receive, in the second time period, data or signaling sent by the terminal.

It may be understood that the terminal does not communicate with the network device after performing the third target operation, to avoid a waste of network resources.

Embodiment 13: According to the method in Embodiment 12, the second time period is indicated by the network device by using eighth information, or is determined by the terminal based on a time length indicated by the network device by using ninth information.

Embodiment 14: According to the method in Embodiment 12, the method further includes:
determining the second time period; and
sending tenth information to the network device, where the tenth information indicates the second time period or a time length of the second time period.

Embodiment 15: A communications method is provided, and is performed by a network device. The method includes:
receiving first information sent by a terminal, where the first information indicates to perform a first target operation on a radio resource control RRC connection of the terminal in a first network, the first target operation includes suspending, releasing, or pausing, and the network device is a network access device in the first network; and
determining, based on the first information, a second target operation to be performed on the RRC connection of the terminal in the first network, where the target operation includes suspending, releasing, or pausing.

According to the foregoing method, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

Embodiment 16: According to the method in Embodiment 15, after the determining, based on the first information, a second target operation to be performed on the RRC connection of the terminal in the first network, the method further includes:
sending second information to the terminal, where the second information indicates the second target operation.

Embodiment 17: According to the method in Embodiment 16, the second information includes or indicates configuration information required by the second target operation.

Embodiment 18: According to the method in any one of Embodiments 15 to 17, after the determining, based on the first information, a second target operation to be performed by the terminal on the RRC connection of the terminal in the first network, the method further includes:
sending, to the terminal, the configuration information that is required by the terminal to perform the second target operation.

Embodiment 19: According to the method in any one of Embodiments 15 to 18, after the determining, based on the first information, a second target operation to be performed by the terminal on the RRC connection of the terminal in the first network, the method further includes:
if seventh information sent by the terminal is not received in a first time period, skipping sending data or signaling to the terminal in the first time period; or
if the seventh information sent by the terminal is not received in the first time period, skipping receiving, in the first time period, data or signaling sent by the terminal; or
if the seventh information sent by the terminal is not received in the first time period, determining that the terminal does not send data or signaling to the network device in the first time period; or
if the seventh information sent by the terminal is not received in the first time period, determining that the terminal does not receive, in the first time period, data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message sent by the terminal is not received, it indicates that the terminal cannot receive data or signaling sent by the network device, or the terminal cannot send data or signaling to the network device, or the terminal is busy. Therefore, the terminal does not communicate with the network device, to avoid a waste of network resources.

Embodiment 20: According to the method in any one of Embodiments 15 to 18, after the determining, based on the first information, a second target operation to be performed by the terminal on the RRC connection of the terminal in the first network, the method further includes:
if seventh information sent by the terminal is received, sending data or signaling to the terminal; or
if the seventh information sent by the terminal is received, receiving data or signaling sent by the terminal; or
if the seventh information sent by the terminal is received, determining that the terminal can send data or signaling to the network device; or
if the seventh information sent by the terminal is received, determining that the terminal receives data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message sent by the terminal is received, it indicates that the terminal can receive data or signaling sent by the network device, or the terminal can send data or signaling to the network device, or the terminal is not busy. Therefore, the terminal starts to communicate with the network device, to effectively ensure that a service of the terminal is performed in the first network.

Embodiment 21: According to the method in any one of Embodiments 15 to 18, after the determining, based on the first information, a second target operation to be performed by the terminal on the RRC connection of the terminal in the first network, the method further includes:
skipping sending data or signaling to the terminal in a first time period; or
skipping receiving, in the first time period, data or signaling sent by the terminal; or
determining that the terminal does not send data or signaling to the network device in the first time period; or
determining that the terminal does not receive, in the first time period, data or signaling sent by the network device.

It may be understood that the terminal does not communicate with the network device after performing the second target operation, to avoid a waste of network resources.

Embodiment 22: According to the method in any one of Embodiments 19 to 21, the first time period is indicated by the terminal by using fourth information, or is determined by the network device based on a time length indicated by the terminal by using fifth information.

Embodiment 23: According to the method in any one of Embodiments 19 to 21, the method further includes:
determining the first time period; and
sending sixth information to the terminal, where the sixth information indicates the first time period or a time length of the first time period.

Embodiment 24: According to the method in any one of Embodiments 19 to 23, if the target operation is pausing, the method further includes:
performing a third target operation on the RRC connection of the terminal in the first network after the first time period, where the third target operation includes suspending or releasing.

It may be understood that, if the RRC connection of the terminal in the first network is paused, and the terminal is still busy after the first time period, the RRC connection of the terminal in the first network is directly released or suspended, to further reduce a waste of network resources.

Embodiment 25: According to the method in Embodiment 24, after the performing a third target operation on the RRC connection of the terminal in the first network after the first time period, the method further includes:
skipping sending data or signaling to the terminal in a second time period; or
skipping receiving, in the second time period, data or signaling sent by the terminal; or
determining that the terminal does not send data or signaling to the network device in the second time period; or
determining that the terminal does not receive, in the second time period, data or signaling sent by the network device.

It may be understood that the terminal does not communicate with the network device after performing the third target operation, to avoid a waste of network resources.

Embodiment 26: According to the method in Embodiment 25, the second time period is indicated by the terminal by using eighth information, or is determined by the network device based on a time length indicated by the terminal by using ninth information.

Embodiment 27: According to the method in Embodiment 25, the method further includes:
determining the second time period; and
sending tenth information to the terminal, where the tenth information indicates the second time period or a time length of the second time period.

Embodiment 28: Embodiments of this application provide a communications method. The method includes:
a terminal sends first information to a network device in a first network, where the first information indicates to perform a first target operation on a radio resource control RRC connection of the terminal in the first network, and the first target operation includes suspending, releasing, or pausing;
the network device receives the first information sent by the terminal;
the network device determines, based on the first information, a second target operation to be performed on the RRC connection of the terminal in the first network, where the target operation includes suspending, releasing, or pausing; and
the terminal performs the second target operation on the RRC connection of the terminal in the first network.

According to the foregoing method, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

Embodiment 29: According to the method in Embodiment 28, if the terminal establishes the RRC connection in the first network and is to communicate with a second network, the terminal performs the operation of sending the first information to the network device in the first network.

It may be understood that, when the terminal has a capability of connecting to the first network and a capability of connecting to the second network, a case in which the terminal has established the RRC connection in the first network and needs to communicate with the second network often occurs. In this case, the terminal sends the first information to the network device in the first network, to indicate or request the network device to suspend, pause, or release the RRC connection of the terminal in the first network. In this way, the network device can accurately learn of a current communication state of the terminal. This can significantly reduce cases of incorrectly determining the communication state as a connected state, an idle state, or an inactive state, and significantly reduce a waste of network resources.

Embodiment 30: According to the method in Embodiment 28 or 29, after the terminal sends the first information to the network device in the first network, and before the terminal performs the second target operation on the RRC connection of the terminal in the first network, the method further includes:
the network device sends second information to the terminal, where the second information indicates the second target operation; and
the terminal receives the second information sent by the network device.

Embodiment 31: According to the method in Embodiment 30, the second information includes or indicates configuration information required by the second target operation.

Embodiment 32: According to the method in any one of Embodiments 28 to 30, before the terminal performs the second target operation on the RRC connection of the terminal in the first network, the method further includes:
the network device sends, to the terminal, the configuration information that is required by the terminal to perform the second target operation; and
the terminal receives the configuration information that is sent by the network device and required by the terminal to perform the second target operation.

Embodiment 33: According to the method in any one of Embodiments 28 to 32,
after the terminal performs the second target operation on the RRC connection of the terminal in the first network, the method further includes:
if the terminal does not send seventh information to the network device in a first time period, skipping sending data or signaling to the network device in the first time period; or
if the terminal does not send the seventh information to the network device in the first time period, skipping receiving, in the first time period, data or signaling sent by the network device; or
if the terminal does not send the seventh information to the network device in the first time period, determining that the network device does not send data or signaling to the terminal in the first time period; or
if the terminal does not send the seventh information to the network device in the first time period, determining that the network device does not receive, in the first time period, data or signaling sent by the terminal.

After the network device determines, based on the first information, the second target operation to be performed by the terminal on the RRC connection of the terminal in the first network, the method further includes:
if the network device does not receive, in a first time period, seventh information sent by the terminal, skipping sending data or signaling to the terminal in the first time period; or
if the network device does not receive, in the first time period, the seventh information sent by the terminal, skipping receiving, in the first time period, data or signaling sent by the terminal; or
if the network device does not receive, in the first time period, the seventh information sent by the terminal, determining that the terminal does not send data or signaling to the network device in the first time period; or
if the network device does not receive, in the first time period, the seventh information sent by the terminal, determining that the terminal does not receive, in the first time period, data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message is not sent to the network device, it indicates that the terminal cannot receive data or signaling sent by the network device, or the terminal cannot send data or signaling to the network device, or the terminal is busy. Therefore, the terminal does not communicate with the network device, to avoid a waste of network resources.

Embodiment 34: According to the method in any one of Embodiments 28 to 33,
after the terminal performs the second target operation on the RRC connection of the terminal in the first network, the method further includes:
if the terminal sends the seventh information to the network device, sending data or signaling to the network device; or
if the terminal sends the seventh information to the network device, receiving data or signaling sent by the network device; or
if the terminal sends the seventh information to the network device, determining that the network device can send data or signaling to the terminal; or
if the terminal sends the seventh information to the network device, determining that the network device receives data or signaling sent by the terminal.

After the network device determines, based on the first information, the second target operation to be performed by the terminal on the RRC connection of the terminal in the first network, the method further includes:
if the network device receives the seventh information sent by the terminal, sending data or signaling to the terminal; or
if the network device receives the seventh information sent by the terminal, receiving data or signaling sent by the terminal; or
if the network device receives the seventh information sent by the terminal, determining that the terminal can send data or signaling to the network device; or
if the network device receives the seventh information sent by the terminal, determining that the terminal receives data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message is sent to the network device, it indicates that the terminal can receive data or signaling sent by the network device, or the terminal can send data or signaling to the network device, or the terminal is not busy. Therefore, the terminal starts to communicate with the network device, to effectively ensure that a service of the terminal is performed in the first network.

Embodiment 35: According to the method in any one of Embodiments 28 to 32,
after the terminal performs the second target operation on the RRC connection of the terminal in the first network, the method further includes:
The terminal does not send data or signaling to the network device in a first time period; or
the terminal does not receive, in the first time period, data or signaling sent by the network device; or
the terminal determines that the network device does not send data or signaling to the terminal in the first time period; or
the terminal determines that the network device does not receive, in the first time period, data or signaling sent by the terminal.

After the network device determines, based on the first information, the second target operation to be performed by the terminal on the RRC connection of the terminal in the first network, the method further includes:
the network device does not send data or signaling to the terminal in the first time period; or
the network device does not receive, in the first time period, data or signaling sent by the terminal; or
the network device determines that the terminal does not send data or signaling to the network device in the first time period; or
the network device determines that the terminal does not receive, in the first time period, data or signaling sent by the network device.

It may be understood that the terminal does not communicate with the network device after performing the second target operation, to avoid a waste of network resources.

Embodiment 36: According to the method in any one of Embodiments 33 to 35, the first time period is indicated by the network device by using fourth information, or the first time period is determined by the terminal based on a time length indicated by the network device by using fifth information. Alternatively, the first time period is indicated by the terminal by using the fourth information, or the first time period is determined by the network device based on a time length indicated by the terminal by using the fifth information.

Embodiment 37: According to the method in any one of Embodiments 33 to 35, the method further includes:
the terminal determines the first time period;
the terminal sends sixth information to the network device, where the sixth information indicates the first time period or a time length of the first time period;
the network device receives the sixth information; and
the network device determines the first time period based on the sixth information.

Embodiment 38: According to the method in any one of Embodiments 33 to 35, the method further includes:
the network device determines the first time period;
the network device sends sixth information to the terminal, where the sixth information indicates the first time period or a time length of the first time period;
the terminal receives the sixth information; and
the terminal determines the first time period based on the sixth information.

Embodiment 39: According to the method in any one of Embodiments 33 to 38, if the target operation is pausing,
after the terminal performs the second target operation on the RRC connection of the terminal in the first network, the method further includes:
the terminal performs a third target operation on the RRC connection of the terminal in the first network after the first time period, where the third target operation includes suspending or releasing.

The network device performs the third target operation on the RRC connection of the terminal in the first network after the first time period.

It may be understood that, if the RRC connection of the terminal in the first network is paused, and the terminal is still busy after the first time period, the RRC connection of the terminal in the first network is directly released or suspended, to further reduce a waste of network resources.

Embodiment 40: According to the method in Embodiment 39,
after the terminal performs the third target operation on the RRC connection of the terminal in the first network after the first time period, the method further includes:
the terminal does not send data or signaling to the network device in a second time period; or
the terminal does not receive, in the second time period, data or signaling sent by the network device; or
the terminal determines that the network device does not send data or signaling to the terminal in the second time period; or
the terminal determines that the network device does not receive, in the second time period, data or signaling sent by the terminal.

After the network device performs the third target operation on the RRC connection of the terminal in the first network after the first time period, the method further includes:
the network device does not send data or signaling to the terminal in the second time period; or
the network device does not receive, in the second time period, data or signaling sent by the terminal; or
the network device determines that the terminal does not send data or signaling to the network device in the second time period; or
the network device determines that the terminal does not receive, in the second time period, data or signaling sent by the network device.

It may be understood that the terminal does not communicate with the network device after performing the third target operation, to avoid a waste of network resources.

Embodiment 41: According to the method in Embodiment 40, the second time period is indicated by the network device by using eighth information, or the second time period is determined by the terminal based on a time length indicated by the network device by using ninth information. Alternatively, the second time period is indicated by the terminal by using the eighth information, or the second time period is determined by the network device based on a time length indicated by the terminal by using the ninth information.

Embodiment 42: According to the method in Embodiment 40, the method further includes:
the terminal determines the second time period;
the terminal sends tenth information to the network device, where the tenth information indicates the second time period or a time length of the second time period;
the network device receives the tenth information; and
the network device determines the second time period based on the tenth information.

Embodiment 43: According to the method in Embodiment 40, the method further includes:
the network device determines the second time period;
the network device sends tenth information to the terminal, where the tenth information indicates the second time period or a time length of the second time period;
the network device receives the tenth information; and
the network device determines the second time period based on the tenth information.

The foregoing describes in detail the method in embodiments of this application. The following provides apparatuses in embodiments of this application.

Embodiment 44: FIG. 4 is a schematic diagram of a structure of a communications apparatus 40 according to an embodiment of this application. The communications apparatus 40 may be the terminal shown in FIG. 2 or a module in the terminal shown in FIG. 2. The communications apparatus 40 may include a first sending unit 401 and a first operation unit 402. Detailed descriptions of the units are as follows:
The first sending unit 401 is configured to send first information to a network device in a first network, where the first information indicates to perform a first target operation on a radio resource control RRC connection of the terminal in the first network, and the first target operation includes suspending, releasing, or pausing.

The first operation unit 402 is configured to perform a second target operation on the RRC connection of the terminal in the first network, where the second target operation includes suspending, releasing, or pausing.

According to the foregoing method, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

Embodiment 45: According to the apparatus in Embodiment 44, the first sending unit is configured to: when the terminal establishes the RRC connection in the first network and needs to communicate with a second network, perform the operation of sending the first information to the network device in the first network.

It may be understood that, when the terminal has a capability of connecting to the first network and a capability of connecting to the second network, a case in which the terminal has established the RRC connection in the first network and needs to communicate with the second network often occurs. In this case, the terminal sends the first information to the network device in the first network, to indicate or request the network device to suspend, pause, or release the RRC connection of the terminal in the first network. In this way, the network device can accurately learn of a current communication state of the terminal. This can significantly reduce cases of incorrectly determining the communication state as a connected state, an idle state, or an inactive state, and significantly reduce a waste of network resources.

Embodiment 46: According to the apparatus in Embodiment 44 or 45, the apparatus further includes:
a first receiving unit, configured to: after the first sending unit sends the first information to the network device in the first network and before the first operation unit performs the second target operation on the RRC connection of the terminal in the first network, receive second information sent by the network device, where the second information indicates the second target operation.

Embodiment 47: According to the apparatus in Embodiment 46, the second information includes or indicates configuration information required by the second target operation.

Embodiment 48: According to the apparatus in any one of Embodiments 44 to 46, the apparatus further includes a second receiving unit, configured to: before the first operation unit performs the second target operation on the RRC connection of the terminal in the first network, receive the configuration information that is sent by the network device and is required to indicate the terminal to perform the second target operation.

Embodiment 49: According to the apparatus in any one of Embodiments 44 to 48, the apparatus further includes a processing unit, configured to: after the first operation unit performs the second target operation on the RRC connection of the terminal in the first network,
if seventh information is not sent to the network device in a first time period, skip sending data or signaling to the network device in the first time period; or
if the seventh information is not sent to the network device in the first time period, skip receiving, in the first time period, data or signaling sent by the network device; or
if the seventh information is not sent to the network device in the first time period, determine that the network device does not send data or signaling to the terminal in the first time period; or
if the seventh information is not sent to the network device in the first time period, determine that the network device does not receive, in the first time period, data or signaling sent by the terminal, where
the seventh information indicates that the terminal can receive data or signaling sent by the network device, or indicates that the terminal can send data or signaling to the network device, or indicates that the terminal is not busy.

It may be understood that, if the seventh message is not sent to the network device, it indicates that the terminal cannot receive data or signaling sent by the network device, or the terminal cannot send data or signaling to the network device, or the terminal is busy. Therefore, the terminal does not communicate with the network device, to avoid a waste of network resources.

Embodiment 50: According to the apparatus in any one of Embodiments 44 to 49, the apparatus further includes: the processing unit, configured to: after the first operation unit performs the second target operation on the RRC connection of the terminal in the first network,
if the seventh information is sent to the network device, send data or signaling to the network device; or
if the seventh information is sent to the network device, receive data or signaling sent by the network device; or
if the seventh information is sent to the network device, determine that the network device can send data or signaling to the terminal; or
if the seventh information is sent to the network device, determine that the network device receives data or signaling sent by the terminal, where
the seventh information indicates that the terminal can receive data or signaling sent by the network device, or indicates that the terminal can send data or signaling to the network device, or indicates that the terminal is not busy.

It may be understood that, if the seventh message is sent to the network device, it indicates that the terminal can receive data or signaling sent by the network device, or the terminal can send data or signaling to the network device, or the terminal is not busy. Therefore, the terminal starts to communicate with the network device, to effectively ensure that a service of the terminal is performed in the first network.

Embodiment 51: According to the apparatus in any one of Embodiments 44 to 48, the apparatus further includes a processing unit, configured to: after the first operation unit performs the second target operation on the RRC connection of the terminal in the first network,
skip sending data or signaling to the network device in a first time period; or
skip receiving, in the first time period, data or signaling sent by the network device; or
determine that the network device does not send data or signaling to the terminal in the first time period; or
determine that the network device does not receive, in the first time period, data or signaling sent by the terminal.

It may be understood that the terminal does not communicate with the network device after performing the second target operation, to avoid a waste of network resources.

Embodiment 52: According to the apparatus in any one of Embodiments 49 to 51, the first time period is indicated by the network device by using fourth information, or is determined by the terminal based on a time length indicated by the network device by using fifth information.

Embodiment 53: According to the apparatus in any one of Embodiments 49 to 51, the apparatus further includes:
a first determining unit, configured to determine the first time period; and
a second sending unit, configured to send sixth information to the network device, where the sixth information indicates the first time period or a time length of the first time period.

Embodiment 54: According to the apparatus in any one of Embodiments 49 to 53, if the target operation is pausing, the apparatus further includes a second operation unit, configured to: after the first operation unit performs the second target operation on the RRC connection of the terminal in the first network, perform a third target operation on the RRC connection of the terminal in the first network after the first time period, where the third target operation includes suspending or releasing.

It may be understood that, if the RRC connection of the terminal in the first network is paused, and the terminal is still busy after the first time period, the RRC connection of the terminal in the first network is directly released or suspended, to further reduce a waste of network resources.

Embodiment 55: According to the apparatus in Embodiment 54, the processing unit is further configured to: after the second operation unit performs the third target operation on the RRC connection of the terminal in the first network after the first time period,
skip sending data or signaling to the network device in a second time period; or
skip receiving, in the second time period, data or signaling sent by the network device; or
determine that the network device does not send data or signaling to the terminal in the second time period; or
determine that the network device does not receive, in the second time period, data or signaling sent by the terminal.

It may be understood that the terminal does not communicate with the network device after performing the third target operation, to avoid a waste of network resources.

Embodiment 56: According to the apparatus in Embodiment 55, the second time period is indicated by the network device by using eighth information, or is determined by the terminal based on a time length indicated by the network device by using ninth information.

Embodiment 57: According to the apparatus in Embodiment 55, the apparatus further includes:
a second determining unit, configured to determine the second time period; and
a third sending unit, configured to send tenth information to the network device, where the tenth information indicates the second time period or a time length of the second time period.

It should be noted that for implementation of each unit, correspondingly refer to the corresponding descriptions in the method embodiment shown in FIG. 2.

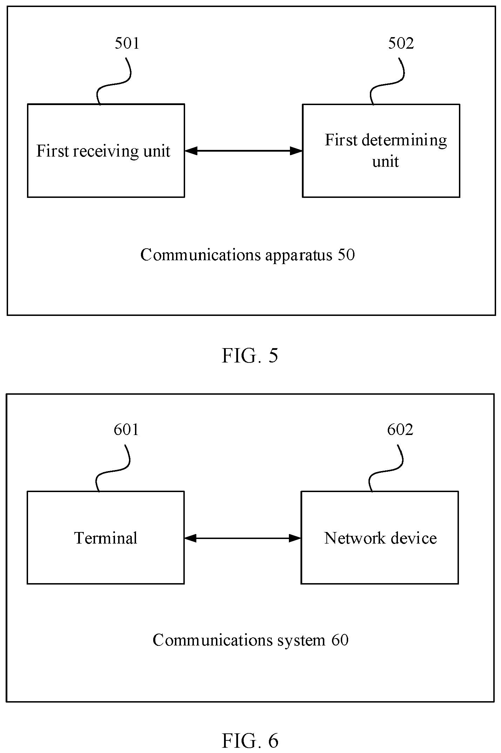

Embodiment 58: FIG. 5 is a schematic diagram of a structure of a communications apparatus 50 according to an embodiment of this application. The communications apparatus may be the network device shown in FIG. 2 or a module in the network device shown in FIG. 2. The communications apparatus may include a first receiving unit 501 and a first determining unit 502. Detailed descriptions of the units are as follows:

The first receiving unit 501 is configured to receive first information sent by a terminal, where the first information indicates to perform a first target operation on a radio resource control RRC connection of the terminal in a first network, the first target operation includes suspending, releasing, or pausing, and the network device is a network access device in the first network.

The first determining unit 502 is configured to determine, based on the first information, a second target operation to be performed on the RRC connection of the terminal in the first network, where the target operation includes suspending, releasing, or pausing.

According to the foregoing method, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

Embodiment 59: According to the apparatus in Embodiment 58, the apparatus further includes a first sending unit, configured to: after the first determining unit determines, based on the first information, the second target operation to be performed on the RRC connection of the terminal in the first network, send second information to the terminal, where the second information indicates the second target operation.

Embodiment 60: According to the apparatus in Embodiment 59, the second information includes or indicates configuration information required by the second target operation.

Embodiment 61: According to the apparatus in any one of Embodiments 58 to 60, the apparatus further includes a second sending unit, configured to: after the first determining unit determines, based on the first information, the second target operation to be performed by the terminal on the RRC connection of the terminal in the first network, send, to the terminal, configuration information required by the terminal to perform the second target operation.

Embodiment 62: According to the apparatus in any one of Embodiments 58 to 61, the apparatus further includes a processing unit, configured to: after the first determining unit determines, based on the first information, the second target operation to be performed by the terminal on the RRC connection of the terminal in the first network,
if seventh information sent by the terminal is not received in a first time period, skip sending data or signaling to the terminal in the first time period; or
if the seventh information sent by the terminal is not received in the first time period, skip receiving, in the first time period, data or signaling sent by the terminal; or
if the seventh information sent by the terminal is not received in the first time period, determine that the terminal does not send data or signaling to the network device in the first time period; or
if the seventh information sent by the terminal is not received in the first time period, determine that the terminal does not receive, in the first time period, data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message sent by the terminal is not received, it indicates that the terminal cannot receive data or signaling sent by the network device, or the terminal cannot send data or signaling to the network device, or the terminal is busy. Therefore, the terminal does not communicate with the network device, to avoid a waste of network resources.

Embodiment 63: According to the apparatus in any one of Embodiments 58 to 61, the apparatus further includes a processing unit, configured to: after the first determining unit determines, based on the first information, the second target operation to be performed by the terminal on the RRC connection of the terminal in the first network,
if seventh information sent by the terminal is received, send data or signaling to the terminal; or
if the seventh information sent by the terminal is received, receive data or signaling sent by the terminal; or
if the seventh information sent by the terminal is received, determine that the terminal can send data or signaling to the network device; or
if the seventh information sent by the terminal is received, determine that the terminal receives data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message sent by the terminal is received, it indicates that the terminal can receive data or signaling sent by the network device, or the terminal can send data or signaling to the network device, or the terminal is not busy. Therefore, the terminal starts to communicate with the network device, to effectively ensure that a service of the terminal is performed in the first network.

Embodiment 64: According to the apparatus in any one of Embodiments 58 to 61, the apparatus further includes a processing unit, configured to: after the first determining unit determines, based on the first information, the second target operation to be performed by the terminal on the RRC connection of the terminal in the first network,
skip sending data or signaling to the terminal in a first time period; or
skip receiving, in the first time period, data or signaling sent by the terminal; or
determine that the terminal does not send data or signaling to the network device in the first time period; or
determine that the terminal does not receive, in the first time period, data or signaling sent by the network device.

It may be understood that the terminal does not communicate with the network device after performing the second target operation, to avoid a waste of network resources.

Embodiment 65: According to the apparatus in any one of Embodiments 62 to 64, the first time period is indicated by the terminal by using fourth information, or is determined by the network device based on a time length indicated by the terminal by using fifth information.

Embodiment 66: According to the apparatus in any one of Embodiments 62 to 64, the apparatus further includes:
a second determining unit, configured to determine the first time period; and
a third sending unit, configured to send sixth information to the terminal, where the sixth information indicates the first time period or a time length of the first time period.

Embodiment 67: According to the apparatus in any one of Embodiments 62 to 66, if the target operation is pausing, the apparatus further includes:
a second operation unit, configured to perform a third target operation on the RRC connection of the terminal in the first network after the first time period, where the third target operation includes suspending or releasing.

It may be understood that, if the RRC connection of the terminal in the first network is paused, and the terminal is still busy after the first time period, the RRC connection of the terminal in the first network is directly released or suspended, to further reduce a waste of network resources.

Embodiment 68: According to the apparatus in Embodiment 67, the processing unit is further configured to: after the second operation unit performs the third target operation on the RRC connection of the terminal in the first network after the first time period,
skip sending data or signaling to the terminal in a second time period; or
skip receiving, in the second time period, data or signaling sent by the terminal; or
determine that the terminal does not send data or signaling to the network device in the second time period; or
determine that the terminal does not receive, in the second time period, data or signaling sent by the network device.

It may be understood that the terminal does not communicate with the network device after performing the third target operation, to avoid a waste of network resources.

Embodiment 69: According to the apparatus in Embodiment 68, the second time period is indicated by the terminal by using eighth information, or is determined by the network device based on a time length indicated by the terminal by using ninth information.

Embodiment 70: According to the apparatus in Embodiment 68, the apparatus further includes:
a third determining unit, configured to determine the second time period; and
a fourth sending unit, configured to send tenth information to the terminal, where the tenth information indicates the second time period or a time length of the second time period.

It should be noted that for implementation of each unit, correspondingly refer to the corresponding descriptions in the method embodiment shown in FIG. 2.

Embodiment 71: FIG. 6 is a schematic diagram of a structure of a communications system 60 according to an embodiment of this application. The communications system may include a terminal 601 and a network device 602. Detailed descriptions of the units are as follows:

The terminal 601 is configured to send first information to the network device in a first network, where the first information indicates to perform a first target operation on a radio resource control RRC connection of the terminal in the first network, and the first target operation includes suspending, releasing, or pausing.

The network device 602 is configured to receive the first information sent by the terminal.

The network device 602 is configured to determine, based on the first information, a second target operation to be performed on the RRC connection of the terminal in the first network, where the target operation includes suspending, releasing, or pausing.

The terminal 601 is configured to perform the second target operation on the RRC connection of the terminal in the first network.

According to the foregoing system, the terminal sends the first information to the network device in the first network, to indicate or request the network device to suspend, pause, or release the RRC connection of the terminal in the first network. In this way, the network device can accurately learn of a current communication state of the terminal. This can reduce cases of incorrectly determining the communication state as a connected state, an idle state, or an inactive state, and reduce a waste of network resources.

Embodiment 72: According to the system in Embodiment 71, the terminal is specifically configured to: when the terminal establishes the RRC connection in the first network and needs to communicate with a second network, send the first information to the network device in the first network.

It may be understood that, when the terminal has a capability of connecting to the first network and a capability of connecting to the second network, a case in which the terminal has established the RRC connection in the first network and needs to communicate with the second network often occurs. In this case, the terminal sends the first information to the network device in the first network, to indicate or request the network device to suspend, pause, or release the RRC connection of the terminal in the first network. In this way, the network device can accurately learn of a current communication state of the terminal. This can significantly reduce cases of incorrectly determining the communication state as a connected state, an idle state, or an inactive state, and significantly reduce a waste of network resources.

Embodiment 73: According to the system in Embodiment 71 or 72, after the terminal sends the first information to the network device in the first network and before the terminal performs the second target operation on the RRC connection of the terminal in the first network, the network device is configured to send second information to the terminal, where the second information indicates the second target operation; and
the terminal is configured to receive the second information sent by the network device.

Embodiment 74: According to the system in Embodiment 73, the second information includes or indicates configuration information required by the second target operation.

Embodiment 75: According to the system in any one of Embodiments 71 to 73, before the terminal performs the second target operation on the RRC connection of the terminal in the first network,
the network device is configured to send, to the terminal, the configuration information that is required by the terminal to perform the second target operation; and
the terminal is configured to receive the configuration information that is sent by the network device and required by the terminal to perform the second target operation.

Embodiment 76: According to the system in any one of Embodiments 71 to 75,
after performing the second target operation on the RRC connection of the terminal in the first network, the terminal is further configured to:
if the terminal does not send seventh information to the network device in a first time period, skip sending data or signaling to the network device in the first time period; or
if the terminal does not send the seventh information to the network device in the first time period, skip receiving, in the first time period, data or signaling sent by the network device; or
if the terminal does not send the seventh information to the network device in the first time period, determine that the network device does not send data or signaling to the terminal in the first time period; or
if the terminal does not send the seventh information to the network device in the first time period, determine that the network device does not receive, in the first time period, data or signaling sent by the terminal.

After determining, based on the first information, the second target operation to be performed by the terminal on the RRC connection of the terminal in the first network, the network device is further configured to:
if the network device does not receive, in a first time period, seventh information sent by the terminal, skip sending data or signaling to the terminal in the first time period; or
if the network device does not receive, in the first time period, the seventh information sent by the terminal, skip receiving, in the first time period, data or signaling sent by the terminal; or
if the network device does not receive, in the first time period, the seventh information sent by the terminal, determine that the terminal does not send data or signaling to the network device in the first time period; or
if the network device does not receive, in the first time period, the seventh information sent by the terminal, determine that the terminal does not receive, in the first time period, data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message is not sent to the network device, it indicates that the terminal cannot receive data or signaling sent by the network device, or the terminal cannot send data or signaling to the network device, or the terminal is busy. Therefore, the terminal does not communicate with the network device, to avoid a waste of network resources.

Embodiment 77: According to the system in any one of Embodiments 71 to 76,
after performing the second target operation on the RRC connection of the terminal in the first network, the terminal is further configured to:
if the terminal sends the seventh information to the network device, send data or signaling to the network device; or
if the terminal sends the seventh information to the network device, receive data or signaling sent by the network device; or
if the terminal sends the seventh information to the network device, determine that the network device can send data or signaling to the terminal; or
if the terminal sends the seventh information to the network device, determine that the network device receives data or signaling sent by the terminal.

After determining, based on the first information, the second target operation to be performed by the terminal on the RRC connection of the terminal in the first network, the network device is further configured to:
if the network device receives the seventh information sent by the terminal, send data or signaling to the terminal; or
if the network device receives the seventh information sent by the terminal, receive data or signaling sent by the terminal; or
if the network device receives the seventh information sent by the terminal, determine that the terminal can send data or signaling to the network device; or
if the network device receives the seventh information sent by the terminal, determine that the terminal receives data or signaling sent by the network device, where
the seventh information indicates that the terminal can receive data or signaling sent by the network device, or indicates that the terminal can send data or signaling to the network device, or indicates that the terminal is not busy.

It may be understood that, if the seventh message is sent to the network device, it indicates that the terminal can receive data or signaling sent by the network device, or the terminal can send data or signaling to the network device, or the terminal is not busy. Therefore, the terminal starts to communicate with the network device, to effectively ensure that a service of the terminal is performed in the first network.

Embodiment 78: According to the system in any one of Embodiments 71 to 75,
after performing the second target operation on the RRC connection of the terminal in the first network, the terminal is further configured to:
skip sending data or signaling to the network device in a first time period; or
skip receiving, in the first time period, data or signaling sent by the network device; or
determine that the network device does not send data or signaling to the terminal in the first time period; or
determine that the network device does not receive, in the first time period, data or signaling sent by the terminal.

After determining, based on the first information, the second target operation to be performed by the terminal on the RRC connection of the terminal in the first network, the network device is further configured to:
skip sending data or signaling to the terminal in the first time period; or
skip receiving, in the first time period, data or signaling sent by the terminal; or
determine that the terminal does not send data or signaling to the network device in the first time period; or
determine that the terminal does not receive, in the first time period, data or signaling sent by the network device.

It may be understood that the terminal does not communicate with the network device after performing the second target operation, to avoid a waste of network resources.

Embodiment 79: According to the system in any one of Embodiments 76 to 78, the first time period is indicated by the network device by using fourth information, or the first time period is determined by the terminal based on a time length indicated by the network device by using fifth information. Alternatively, the first time period is indicated by the terminal by using the fourth information, or the first time period is determined by the network device based on a time length indicated by the terminal by using the fifth information.

Embodiment 80: According to the system in any one of Embodiments 76 to 78,
the terminal is further configured to determine the first time period;
the terminal is further configured to send sixth information to the network device, where the sixth information indicates the first time period or a time length of the first time period;
the network device is further configured to receive the sixth information; and
the network device is further configured to determine the first time period based on the sixth information.

Embodiment 81: According to the system in any one of Embodiments 76 to 78,
the network device is further configured to determine the first time period;
the network device is further configured to send sixth information to the terminal, where the sixth information indicates the first time period or a time length of the first time period;
the terminal is further configured to receive the sixth information; and
the terminal is further configured to determine the first time period based on the sixth information.

Embodiment 82: According to the system in any one of Embodiments 76 to 81, if the target operation is pausing,
after performing the second target operation on the RRC connection of the terminal in the first network,
the terminal is further configured to perform a third target operation on the RRC connection of the terminal in the first network after the first time period, where the third target operation includes suspending or releasing; and
the network device is further configured to perform the third target operation on the RRC connection of the terminal in the first network after the first time period.

It may be understood that, if the RRC connection of the terminal in the first network is paused, and the terminal is still busy after the first time period, the RRC connection of the terminal in the first network is directly released or suspended, to further reduce a waste of network resources.

Embodiment 83: According to the system in Embodiment 82,
after performing the third target operation on the RRC connection of the terminal in the first network after the first time period, the terminal is further configured to:
skip sending data or signaling to the network device in a second time period; or
skip receiving, in the second time period, data or signaling sent by the network device; or
determine that the network device does not send data or signaling to the terminal in the second time period; or
determine that the network device does not receive, in the second time period, data or signaling sent by the terminal.

After performing the third target operation on the RRC connection of the terminal in the first network after the first time period, the network device is further configured to:
skip sending data or signaling to the terminal in a second time period; or
skip receiving, in the second time period, data or signaling sent by the terminal; or
determine that the terminal does not send data or signaling to the network device in the second time period; or
determine that the terminal does not receive, in the second time period, data or signaling sent by the network device.

It may be understood that the terminal does not communicate with the network device after performing the third target operation, to avoid a waste of network resources.

Embodiment 84: According to the system in Embodiment 83, the second time period is indicated by the network device by using eighth information, or the second time period is determined by the terminal based on a time length indicated by the network device by using ninth information. Alternatively, the second time period is indicated by the terminal by using the eighth information, or the second time period is determined by the network device based on a time length indicated by the terminal by using the ninth information.

Embodiment 85: According to the system in Embodiment 83,
the terminal is further configured to determine the second time period;
the terminal is further configured to send tenth information to the network device, where the tenth information indicates the second time period or a time length of the second time period;
the network device is further configured to receive the tenth information; and
the network device is further configured to determine the second time period based on the tenth information.

Embodiment 86: According to the system in Embodiment 83,
the network device is further configured to determine the second time period;
the network device is further configured to send tenth information to the terminal, where the tenth information indicates the second time period or a time length of the second time period;
the network device is further configured to receive the tenth information; and
the network device is further configured to determine the second time period based on the tenth information.

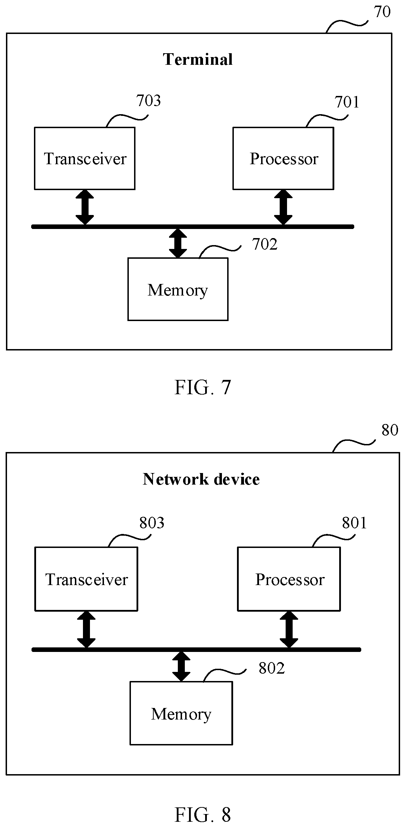

FIG. 7 shows a terminal 70 according to an embodiment of this application. The terminal 70 includes a processor 701, a memory 702, and a transceiver 703. The processor 701, the memory 702, and the transceiver 703 are connected to each other through a bus.

The memory 702 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 702 is configured to store a related computer program and data. The transceiver 703 is configured to receive and send data.

The processor 701 may be one or more central processing units (central processing unit, CPU). When the processor 701 is one CPU, the CPU may be a single-core CPU or a multi-core CPU.

The processor 701 in the terminal 70 reads computer program code stored in the memory 702, and is configured to perform any one of Embodiment 1 to Embodiment 14. For implementation of each embodiment, refer to corresponding descriptions in the method embodiment shown in FIG. 2.

FIG. 8 shows a network device 80 according to an embodiment of this application. The network device 80 includes a processor 801, a memory 802, and a transceiver 803. The processor 801, the memory 802, and the transceiver 803 are connected to each other through a bus.

The memory 802 includes, but is not limited to, a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory 802 is configured to store a related computer program and data. The transceiver 803 is configured to receive and send data.

The processor 801 may be one or more central processing units (central processing unit, CPU). When the processor 801 is one CPU, the CPU may be a single-core CPU or a multi-core CPU.

The processor 801 in the network device 80 reads computer program code stored in the memory 802, and is configured to perform any one of Embodiment 15 to Embodiment 27. For implementation of each embodiment, refer to corresponding descriptions in the method embodiment shown in FIG. 2.

Embodiments of this application further provide a chip system. The chip system includes at least one processor, a memory, and an interface circuit. The memory, the interface circuit, and the at least one processor are interconnected through a line. The at least one memory stores a computer program, and when the computer program is executed by the processor, any one of Embodiment 1 to Embodiment 14 is implemented.

Embodiments of this application further provide a computer-readable storage medium. The computer-readable storage medium stores a computer program. When the computer program is run on a processor, any one of Embodiment 1 to Embodiment 14 is implemented.

Embodiments of this application further provide a computer program product. The computer program product is stored in a storage medium. When the computer program product is run on a processor, any one of Embodiment 1 to Embodiment 14 is implemented.

Embodiments of this application further provide a chip system. The chip system includes at least one processor, a memory, and an interface circuit. The memory, the interface circuit, and the at least one processor are interconnected through a line. The at least one memory stores a computer program, and when the computer program is executed by the processor, any one of Embodiment 15 to Embodiment 27 is implemented.

Embodiments of this application further provide a computer-readable storage medium. The computer-readable storage medium stores a computer program. When the computer program is run on a processor, any one of Embodiment 15 to Embodiment 27 is implemented.

Embodiments of this application further provide a computer program product. The computer program product is stored in a storage medium. When the computer program product is run on a processor, any one of Embodiment 15 to Embodiment 27 is implemented. A person of ordinary skill in the art may understand that all or some of the processes of the methods in the foregoing embodiments may be implemented by a computer program instructing related hardware. The computer program may be stored in a computer-readable storage medium. When the computer program is run, the processes in the foregoing method embodiments are performed. The foregoing storage medium includes: any medium that can store computer program code, such as a ROM, a random access memory RAM, a magnetic disk, or an optical disc.

## Claims

1. A communications method, wherein the method is performed by a terminal, and the method comprises:
sending first information to a network device in a first network, wherein the first information indicates to perform a first target operation on a radio resource control RRC connection of the terminal in the first network, and the first target operation comprises suspending, releasing, or pausing; and
performing a second target operation on the RRC connection of the terminal in the first network, wherein the second target operation comprises suspending, releasing, or pausing.

2. The method according to claim 1, wherein if the terminal establishes the RRC connection in the first network and needs to communicate with a second network, the terminal performs the operation of sending the first information to the network device in the first network.

3. The method according to claim 1 or 2, wherein after the sending first information to a network device in a first network, and before the performing a second target operation on the RRC connection of the terminal in the first network, the method further comprises:
receiving second information sent by the network device, wherein the second information indicates the second target operation.

4. The method according to any one of claims 1 to 3, wherein after the performing a second target operation on the RRC connection of the terminal in the first network, the method further comprises:
if seventh information is not sent to the network device in a first time period, skipping sending data or signaling to the network device in the first time period; or
if the seventh information is not sent to the network device in the first time period, skipping receiving, in the first time period, data or signaling sent by the network device; or
if the seventh information is not sent to the network device in the first time period, determining that the network device does not send data or signaling to the terminal in the first time period; or
if the seventh information is not sent to the network device in the first time period, determining that the network device does not receive, in the first time period, data or signaling sent by the terminal, wherein
the seventh information indicates that the terminal can receive data or signaling sent by the network device, or indicates that the terminal can send data or signaling to the network device, or indicates that the terminal is not busy.

5. The method according to any one of claims 1 to 4, wherein after the performing a second target operation on the RRC connection of the terminal in the first network, the method further comprises:
if the seventh information is sent to the network device, sending data or signaling to the network device; or
if the seventh information is sent to the network device, receiving data or signaling sent by the network device; or
if the seventh information is sent to the network device, determining that the network device can send data or signaling to the terminal; or
if the seventh information is sent to the network device, determining that the network device receives data or signaling sent by the terminal, wherein
the seventh information indicates that the terminal can receive data or signaling sent by the network device, or indicates that the terminal can send data or signaling to the network device, or indicates that the terminal is not busy.

6. The method according to any one of claims 1 to 3, wherein after the performing a second target operation on the RRC connection of the terminal in the first network, the method further comprises:
skipping sending data or signaling to the network device in a first time period; or
skipping receiving, in the first time period, data or signaling sent by the network device; or
determining that the network device does not send data or signaling to the terminal in the first time period; or
determining that the network device does not receive, in the first time period, data or signaling sent by the terminal.

7. The method according to any one of claims 4 to 6, wherein if the target operation is pausing, after the performing a second target operation on the RRC connection of the terminal in the first network, the method further comprises:
performing a third target operation on the RRC connection of the terminal in the first network after the first time period, wherein the third target operation comprises suspending or releasing.

8. The method according to claim 7, wherein after the performing a third target operation on the RRC connection of the terminal in the first network after the first time period, the method further comprises:
skipping sending data or signaling to the network device in a second time period; or
skipping receiving, in the second time period, data or signaling sent by the network device; or
determining that the network device does not send data or signaling to the terminal in the second time period; or
determining that the network device does not receive, in the second time period, data or signaling sent by the terminal.

9. A communications method, wherein the method is performed by a network device, and the method comprises:
receiving first information sent by a terminal, wherein the first information indicates to perform a first target operation on a radio resource control RRC connection of the terminal in a first network, the first target operation comprises suspending, releasing, or pausing, and the network device is a network access device in the first network; and
determining, based on the first information, a second target operation to be performed on the RRC connection of the terminal in the first network, wherein the target operation comprises suspending, releasing, or pausing.

10. The method according to claim 9, wherein after the determining, based on the first information, a second target operation to be performed on the RRC connection of the terminal in the first network, the method further comprises:
sending second information to the terminal, wherein the second information indicates the second target operation.

11. The method according to claim 9 or 10, wherein after the determining, based on the first information, a second target operation to be performed by the terminal on the RRC connection of the terminal in the first network, the method further comprises:
if seventh information sent by the terminal is not received in a first time period, skipping sending data or signaling to the terminal in the first time period; or
if the seventh information sent by the terminal is not received in the first time period, skipping receiving, in the first time period, data or signaling sent by the terminal; or
if the seventh information sent by the terminal is not received in the first time period, determining that the terminal does not send data or signaling to the network device in the first time period; or
if the seventh information sent by the terminal is not received in the first time period, determining that the terminal does not receive, in the first time period, data or signaling sent by the network device, wherein
the seventh information indicates that the terminal can receive data or signaling sent by the network device, or indicates that the terminal can send data or signaling to the network device, or indicates that the terminal is not busy.

12. The method according to claim 9 or 10, wherein after the determining, based on the first information, a second target operation to be performed by the terminal on the RRC connection of the terminal in the first network, the method further comprises:
if seventh information sent by the terminal is received, sending data or signaling to the terminal; or
if the seventh information sent by the terminal is received, receiving data or signaling sent by the terminal; or
if the seventh information sent by the terminal is received, determining that the terminal can send data or signaling to the network device; or
if the seventh information sent by the terminal is received, determining that the terminal receives data or signaling sent by the network device, wherein
the seventh information indicates that the terminal can receive data or signaling sent by the network device, or indicates that the terminal can send data or signaling to the network device, or indicates that the terminal is not busy.

13. The method according to claim 9 or 10, wherein after the determining, based on the first information, a second target operation to be performed by the terminal on the RRC connection of the terminal in the first network, the method further comprises:
skipping sending data or signaling to the terminal in a first time period; or
skipping receiving, in the first time period, data or signaling sent by the terminal; or
determining that the terminal does not send data or signaling to the network device in the first time period; or
determining that the terminal does not receive, in the first time period, data or signaling sent by the network device.

14. The method according to any one of claims 11 to 13, wherein if the target operation is pausing, the method further comprises:
performing a third target operation on the RRC connection of the terminal in the first network after the first time period, wherein the third target operation comprises suspending or releasing.

15. The method according to claim 14, wherein after the performing a third target operation on the RRC connection of the terminal in the first network after the first time period, the method further comprises:
skipping sending data or signaling to the terminal in a second time period; or
skipping receiving, in the second time period, data or signaling sent by the terminal; or
determining that the terminal does not send data or signaling to the network device in the second time period; or
determining that the terminal does not receive, in the second time period, data or signaling sent by the network device.

16. A terminal, comprising a processor, a memory, and a transceiver, wherein the memory is configured to store a computer program, and the processor invokes the computer program to perform the method according to any one of claims 1 to 8.

17. A network device, comprising a processor, a memory, and a transceiver, wherein the memory is configured to store a computer program, and the processor invokes the computer program to perform the method according to any one of claims 9 to 15.

18. A computer storage medium, wherein the computer storage medium stores a computer program, and when the computer program is run on a processor, the method according to any one of claims 1 to 15 is implemented.

19. A chip system, wherein the chip system comprises at least one processor, a memory, and an interface circuit, the memory, the interface circuit, and the at least one processor are interconnected through a line, the at least one memory stores a computer program, and when the computer program is executed by the processor, the method according to any one of claims 1 to 15 is implemented.
